# EUROPÄISCHE PATENTSCHRIFT

(11) **EP 3 899 403 B1**
(45) Veröffentlichungstag und Bekanntmachung des Hinweises auf die Patenterteilung: **04.11.2026**
(21) Anmeldenummer: 19831613.5
(22) Anmeldetag: 12.12.2019
(51) Int. Cl.: F28D 20/02

(54) **VERFAHREN ZUR SPEICHERUNG EINES ANORGANISCHEN SALZES UND SPEICHERVORRICHTUNG**
PROCESS TO STORE AN ANORGANIC SALT AND STORAGE APPARATUS
PROCEDE DE SOCKAGE D'UN SEL ANORGANIQUE ET APPAREIL DE STOCKAGE

(30) Priorität: 20.12.2018 DE 102018222602
(43) Veröffentlichungstag der Anmeldung: 27.10.2021
(73) Patentinhaber: Deutsches Zentrum für Luft- und Raumfahrt e.V., 51147 Köln (DE)
(72) Erfinder: BONK, Alexander, 75173 Pforzheim (DE); BRAUN, Markus, 76227 Karlsruhe (DE); FORSTNER, Jochen, 75397 Simmozheim (DE); SÖTZ, Veronika, 51147 Köln (DE); BAUER, Thomas, 50672 Köln (DE)
(74) Vertreter: DTS Patent- und Rechtsanwälte PartmbB
(86) Internationale Anmeldenummer: PCT/EP2019/084937
(87) Internationale Veröffentlichungsnummer: WO 2020/126839

(56) Entgegenhaltungen:
- WO-A1-2017/093030
- WO-A1-2017/186566

## Beschreibung

Die vorliegende Erfindung betrifft ein Verfahren zur Speicherung eines anorganischen Salzes, wobei das anorganische Salz insbesondere ein Wärmeträgermedium und/oder ein Wärmespeichermedium ist.

Die vorliegende Erfindung betrifft ferner eine Speichervorrichtung.

Aus dem Stand der Technik sind bereits derartige Verfahren bzw. Vorrichtungen beispielhaft aus der WO 2017/186566 A1 sowie aus der WO 2017/093030 A1 bekannt.

Der vorliegenden Erfindung liegt die Aufgabe zugrunde, ein Verfahren zur Speicherung eines anorganischen Salzes bereitzustellen, bei welchem das anorganische Salz eine erhöhte Lebensdauer aufweist und bei welchem eine Stabilität einer Salzschmelze aus dem anorganischen Salz erhöht ist.

Diese Aufgabe wird erfindungsgemäß durch ein Verfahren zur Speicherung eines anorganischen Salzes gelöst, wobei das anorganische Salz insbesondere ein Wärmeträgermedium und/oder ein Wärmespeichermedium ist, wobei das Verfahren Folgendes umfasst:
- Bereitstellen eines anorganischen Salzes in flüssigem Zustand, umfassend Anionen, welche sich bei Wärmezufuhr unter Bildung zumindest eines gasförmigen Zerfallsprodukts zersetzen; und
- Einstellen eines Drucks einer Gasatmosphäre, wobei die Gasatmosphäre in einem chemischen Gleichgewicht mit dem anorganischen Salz in flüssigem Zustand steht, dadurch gekennzeichnet, dass
   der Druck der Gasatmosphäre durch Erhöhen eines Partialdrucks des zumindest einen gasförmigen Zerfallsprodukts eingestellt wird.

Das Verfahren findet vorzugsweise Verwendung in Parabolrinnenkraftwerken oder Fresnel-Kraftwerken, in welchen Wärmeträgermedien und/oder Wärmespeichermedien in Hochtemperaturbereichen zum Einsatz kommen.

Alternativ kann das erfindungsgemäße Verfahren auch allgemein in Strom-Wärme-Strom-Speichern, in Systemen, welche eine Kraft-Wärme-Kopplung umfassen, beispielsweise Heizkraftwerke, in Zwischenspeicherungen von Hochtemperaturprozesswärmen, in Wärmeträgeranwendungen in der Prozessindustrie und in weiteren sensiblen Wärmespeicherungen mit Flüssigsalzen verwendet werden.

Der Druck der Gasatmosphäre ist insbesondere ein Partialdruck eines Gases oder die Summe aus mehreren oder sämtlichen Partialdrücken vorhandener Gase.

Das anorganische Salz in flüssigem Zustand ist vorzugsweise eine Salzschmelze, welche insbesondere eine oder mehrere ionische Flüssigkeiten umfasst. Das anorganische Salz liegt hierbei teilweise oder vollständig in dissoziierter Form in Anionen und Kationen vor.

"Einstellen des Drucks" der Gasatmosphäre bedeutet vorzugsweise eine aktive Druckeinstellung.

Der Druck der Gasatmosphäre wird vorzugsweise gesteuert und/oder geregelt.

Durch das Einstellen des Drucks der Gasatmosphäre wird ein Gleichgewicht der Zersetzungsreaktion der Anionen in zumindest ein gasförmiges Zerfallsprodukt vorzugsweise auf die Eduktseite (Anionen) verschoben, wodurch weniger Anionen zersetzt werden und die Lebensdauer des anorganischen Salzes steigt.

Dadurch, dass weniger Anionen zersetzt werden, sind stoffliche Veränderungen des anorganischen Salzes vorzugsweise minimiert. So sind insbesondere Eigenschaften wie beispielsweise Viskosität, Wärmekapazität, Schmelztemperatur und Korrosivität auch über eine jahrelange und sogar jahrzehntelange Speicherung des anorganischen Salzes hinweg im Wesentlichen unverändert.

Vorzugsweise kann eine Betriebstemperatur aufgrund verminderter Zersetzung der Anionen des anorganischen Salzes im Vergleich zu offenen Systemen, bei welchen ein Druck der Gasatmosphäre nicht einstellbar ist, erhöht werden.

Günstig kann es sein, wenn die Anionen eines oder mehrere der folgenden Anionen umfassen oder daraus gebildet sind: Nitrate, Nitrite, Chloride, Carbonate und Sulfate.

Vorzugsweise umfasst das anorganische Salz ein oder mehrere Nitratsalze und ein oder mehrere Nitritsalze oder ist aus einer Mischung aus einem oder mehreren Nitratsalzen und einem oder mehreren Nitritsalzen gebildet ist.

Ein molares Verhältnis aus Nitrat und Nitrit liegt vorzugsweise bei ca. 85:15.

Vorteilhaft kann es sein, wenn das anorganische Salz eine Mischung aus zwei Nitratsalzen und zwei Nitritsalzen umfasst oder daraus gebildet ist.

Beispielsweise umfasst das anorganische Salz ein oder mehrere Kaliumsalze und ein oder mehrere Natriumsalze oder ist aus einer Mischung aus einem oder mehreren Natriumsalzen und einem oder mehreren Kaliumsalzen gebildet.

Ein molares Verhältnis von Natrium zu Kalium liegt vorzugsweise bei ca. 65:45.

Günstig kann es sein, wenn das anorganische Salz Natriumnitrat, Kaliumnitrat, Natriumnitrit und Kaliumnitrit umfasst oder daraus gebildet ist.

Es kann vorgesehen sein, dass die Anionen Hydroxide umfassen, welche mit Wasserdampf in der Gasatmosphäre in Wechselwirkung und/oder im Gleichgeweicht stehen.

Ergänzend oder alternativ kann vorgesehen sein, dass die Anionen Oxidionen umfassen, welche in Wechselwirkung und/oder im Gleichgewicht mit gasförmigen Stickstoffoxiden stehen.

Bei anorganischen Nitratsalzen kommt es beispielsweise bei einer dauerhaften Erwärmung, insbesondere auf ca. 400°C bis ca. 500°C (oder mehr), zu den folgenden Zersetzungsreaktionen:

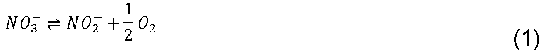

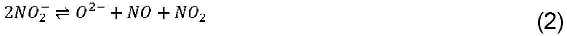

Hierbei entstehen insbesondere als gasförmige Zerfallsprodukte Sauerstoff (O₂), Stickstoffmonoxid (NO) und Stickstoffdioxid (NO₂). Es können auch weitere Stickstoffoxide, beispielsweise Distickstofftetroxid, Distickstoffpentoxid, Nitrosylazid, N-Diazonitramid, Distickstofftrioxid und Trinitramid gebildet werden.

Eine Gleichgewichtskonstante K₁ für Reaktion (1) ist hierbei: ${K}_{1} = \left[\frac{c \left({NO}_{2}^{-}\right)}{c \left({NO}_{3}^{-}\right)}\right] \times p {\left({O}_{2}\right)}^{\frac{1}{2}}$

Es liegt eine Abhängigkeit der Gleichgewichtskonstante K₁ von einem Partialdruck des Sauerstoffs vor.

Eine Gleichgewichtskonstante K₂ für Reaktion (2) ergibt sich gemäß folgender Gleichung: ${K}_{2} = \left[\frac{c {\left({O}^{2 -}\right)}^{2}}{c \left({NO}_{2}^{-}\right)}\right] \times p \left(NO\right) \times p \left({NO}_{2}\right)$

Die Gleichgewichtskonstante K₂ ist von einem Partialdruck von Stickstoffmonoxid und einem Partialdruck von Stickstoffdioxid abhängig.

Vorzugsweise ist eine Gleichgewichtskonstante einer Zersetzungsreaktion von Partialdrücken der unterschiedlichen gasförmigen Zerfallsprodukte abhängig.

Die Zersetzungsreaktionen sind vorzugsweise reversibel.

Insbesondere umfasst das anorganische Salz in flüssigem Zustand Kationen, wobei die Kationen vorzugsweise Metallkationen umfassen oder daraus gebildet sind.

Vorzugsweise umfassen die Kationen Alkalimetallkationen, beispielsweise eines oder mehrere der folgenden Kationen, oder sind daraus gebildet: Lithiumkationen, Natriumkationen, Kaliumkationen, Cäsiumkationen und Rubidiumkationen.

Ergänzend oder alternativ umfassen die Kationen Erdalkalimetallkationen, beispielsweise eines oder mehrere der folgenden Kationen, oder sind daraus gebildet: Magnesiumkationen, Calciumkationen, Strontiumkationen und Bariumkationen.

Es kann vorgesehen sein, dass Salzmischungen, beispielsweise eine Mischung aus Kaliumnitrat und Magnesiumnitrat, verwendet werden.

Beispielsweise werden die folgenden anorganischen Salze mit dem Verfahren gespeichert:
- Alkalinitrate, Erdalkalinitrate, Alkalinitrite, Erdalkalinitrite oder Mischungen davon; oder
- Alkalichloride, Erdalkalichloride oder Mischungen davon; oder
- Alkalicarbonate, Erdalkalicarbonate oder Mischungen davon; oder
- Alkalisulfate, Erdalkalisulfate oder Mischungen davon.

Insbesondere umfassen die Kationen Aluminiumkationen und/oder Bleikationen oder sind daraus gebildet.

Ergänzend oder alternativ umfassen die Kationen Übergangsmetallkationen, beispielsweise eines oder mehrere der folgenden Kationen, oder sind daraus gebildet: Nickelkationen, Molybdänkationen, Cobaltkationen, Zirkoniumkationen, Titankationen, Mangankationen, Eisenkationen, Kupferkationen, Chromkationen und Zinkkationen.

Im Falle von nitrat- und/oder nitrithaltigen anorganischen Salzen oder Nitratsalzen und/oder Nitritsalzen umfasst die Gasatmosphäre vorzugsweise eines oder mehrere der folgenden Gase: Stickstoff, Argon, Sauerstoff, Ozon, Stickstoffmonoxid, Stickstoffdioxid, Distickstofftetroxid, Distickstoffpentoxid, Nitrosylazid, N-Diazonitramid, Distickstofftrioxid und Trinitramid. Alternativ ist die Gasatmosphäre aus Stickstoffmonoxid, Sauerstoff, Stickstoffdioxid, Distickstofftetroxid, Distickstoffpentoxid, Nitrosylazid, N-Diazonitramid, Distickstofftrioxid und Trinitramid gebildet.

Es liegen vorzugsweise ca. 10% (Vol.-% oder mol%) bis ca. 100% (Vol.-% oder mol%) Sauerstoff in der Gasatmosphäre vor.

Vorzugsweise umfasst die Gasatmosphäre Sauerstoff, Stickstoffmonoxid und ein weiteres Stickstoffoxid, beispielsweise Distickstoffmonoxid oder Stickstoffdioxid oder Distickstofftetroxid.

Als besonders geeignet hat sich ein Sauerstoffanteil von ca. 50 Vol.-% oder mehr, bezogen auf ein Gesamtvolumen der Gasatmosphäre, erwiesen.

Insbesondere liegt ein Sauerstoffanteil von ca. 50 mol% oder mehr, bezogen auf eine Gesamtstoffmenge in der Gasatmosphäre, vor.

Vorzugsweise liegen ca. 0,001% (Vol.-% oder mol%) bis ca. 80% (Vol.-% oder mol%), insbesondere ca. 1% (Vol.-% oder mol%) bis ca. 50% (Vol.-% oder mol%), Stickstoffoxide in der Gasatmosphäre vor.

Ein Anteil an Stickstoffmonoxid an der Gasatmosphäre liegt vorzugsweise in einem Bereich von ca. 0,1 Vol.-% bis ca. 1 Vol.-% bezogen auf ein Gesamtvolumen der Gasatmosphäre und/oder in einem Bereich von ca. 0,1 mol% bis ca. 1% mol% bezogen auf eine Gesamtstoffmenge in der Gasatmosphäre.

Ergänzend zu dem Stickstoffmonoxid umfasst die Gasatmosphäre vorzugsweise ein weiteres Stickstoffoxid, beispielsweise Distickstoffmonoxid oder Stickstoffdioxid oder Distickstofftetroxid, insbesondere in einem Anteil von ca. 0,01 Vol.-% bis ca. 1 Vol.-% bezogen auf das Gesamtvolumen der Gasatmosphäre und/oder in einem Anteil von ca. 0,01 mol% bis ca. 1% mol% beträgt, bezogen auf die Gesamtstoffmenge in der Gasatmosphäre.

Im Falle von chloridhaltigen anorganischen Salzen oder Chloridsalzen umfasst die Gasatmosphäre vorzugsweise eines oder mehrere der folgenden Gase: Stickstoff, Argon, Wasserstoff, Chlor und Chlorwasserstoff. Alternativ ist die Gasatmosphäre aus Chlor und/oder Chlorwasserstoff gebildet.

Auch im Falle von chloridhaltigen anorganischen Salzen oder Chloridsalzen können Stickstoffoxide gebildet werden, beispielsweise eines oder mehrere der folgenden Stickstoffoxide: Stickstoffmonoxid, Stickstoffdioxid, Distickstofftetroxid, Distickstoffpentoxid, Nitrosylazid, N-Diazonitramid, Distickstofftrioxid und Trinitramid.

Im Falle von carbonathaltigen anorganischen Salzen oder Carbonatsalzen umfasst die Gasatmosphäre vorzugsweise eines oder mehrere der folgenden Gase: Stickstoff, Argon, Sauerstoff, Kohlenstoffmonoxid und Kohlenstoffdioxid. Alternativ ist die Gasatmosphäre aus Kohlenstoffmonoxid und/oder Kohlenstoffdioxid gebildet.

Auch im Falle von carbonathaltigen anorganischen Salzen oder Carbonatsalzen können Stickstoffoxide gebildet werden, beispielsweise eines oder mehrere der folgenden Stickstoffoxide: Stickstoffmonoxid, Stickstoffdioxid, Distickstofftetroxid, Distickstoffpentoxid, Nitrosylazid, N-Diazonitramid, Distickstofftrioxid und Trinitramid.

Im Falle von sulfathaltigen anorganischen Salzen oder Sulfatsalzen umfasst die Gasatmosphäre vorzugsweise eines oder mehrere der folgenden Gase: Stickstoff, Argon, Schwefelmonoxid und Schwefeldioxid. Alternativ ist die Gasatmosphäre aus Schwefelmonoxid und/oder Schwefeldioxid gebildet.

Auch im Falle von sulfathaltigen anorganischen Salzen oder Sulfatsalzen können Stickstoffoxide gebildet werden, beispielsweise eines oder mehrere der folgenden Stickstoffoxide: Stickstoffmonoxid, Stickstoffdioxid, Distickstofftetroxid, Distickstoffpentoxid, Nitrosylazid, N-Diazonitramid, Distickstofftrioxid und Trinitramid.

Neben Schwefelmonoxid und/oder Schwefeldioxid können sich auch weitere Schwefelgase bilden.

Stickstoff und/oder Argon dienen insbesondere als Inertgas und stehen insbesondere nicht in Wechselwirkung mit dem anorganischen Salz in flüssigem Zustand.

Günstig kann es sein, wenn das anorganische Salz in flüssigem Zustand in mindestens einem Aufnahmebehälter einer fluiddichten Fluidführung einer Speichervorrichtung bereitgestellt wird, wobei insbesondere mittels einer Drucksteuerungs- und/oder -regelungseinrichtung ein konstanter Druck der Gasatmosphäre in dem mindestens einen Aufnahmebehälter eingestellt wird.

Durch die, insbesondere aktive, Einstellung des Drucks der Gasatmosphäre wird vorzugsweise das Gleichgewicht einer Zersetzungsreaktion der Anionen kontrolliert auf die Eduktseite verschoben.

Für eine verbesserte Kontrolle des Verfahrens kann vorgesehen sein, dass während der Speicherung Messungen in dem anorganischen Salz vorgenommen werden, insbesondere um eine Zersetzungsreaktion zu überwachen. Vorzugsweise wird eine qualitative Anionencharakterisierung *ex situ* vorgenommen.

Um eine Korrosion zu minimieren, kann es vorteilhaft sein, wenn ein Oxidionen-Anteil (O²⁻-Anteil) des anorganischen Salzes in flüssigem Zustand eingestellt wird. Hierzu wird der Gasatmosphäre insbesondere Kohlenstoffdioxid zugesetzt, welches mit den Oxidionen des anorganischen Salzes in flüssigem Zustand Carbonate bildet. Carbonate sind typischerweise weniger korrosiv als Oxidionen.

Ein Anteil der Anionen in dem anorganischen Salz in flüssigem Zustand wird vorzugsweise durch lonenchromatographie bestimmt. Eine Kalibrierung hierfür findet vorzugsweise innerhalb des unmittelbaren Messbereichs statt. Insbesondere wird eine Kalibrierungskurve zur Identifizierung einer Peak-Fläche der Messung bei der entsprechenden Konzentration herangezogen. Für die Anionen wird vorzugsweise eine "least square polynomial fit"-Funktion zur Kurvenanpassung und eine StandardAbweichung verwendet.

Durch Analyse von weiteren Spezies, beispielsweise Halogeniden, Carbonaten, Chromaten, Silikaten, können in der Fluidführung vorhandene Bestandteile, insbesondere qualitativ, charakterisiert werden.

Das anorganische Salz in flüssigem Zustand und die Gasatmosphäre bilden vorzugsweise in einer hermetisch abgeschlossenen Fluidführung einer Speichervorrichtung ein isochores System. Aufgrund des im Wesentlichen unveränderten Volumens der Gasatmosphäre kann die zuvor beschriebene Gleichgewichtsverschiebung auf Eduktseite realisiert werden.

Eine hermetische Abriegelung der Fluidführung erfolgt vorzugsweise vor einem Erwärmen und/oder vor einer Inbetriebnahme der Speichervorrichtung.

Es ist weiter vorgesehen, dass der Druck der Gasatmosphäre durch Erhöhen eines Partialdrucks zumindest eines gasförmigen Zerfallsprodukts eingestellt wird. Insbesondere kann der Partialdruck durch Zuführen des zumindest einen gasförmigen Zerfallsprodukts zu der Gasatmosphäre oder durch Bereitstellen des anorganischen Salzes in flüssigem Zustand in mindestens einem Aufnahmebehälter einer fluiddichten Fluidführung erhöht werden.

Es ist vorzugsweise eine Zusatzgaszuführvorrichtung vorgesehen, mittels welcher ein oder mehrere gasförmige Zerfallsprodukte der Gasatmosphäre zugeführt werden und/oder zuführbar sind.

Ergänzend oder alternativ wird der Gasatmosphäre mittels der Zusatzgaszuführvorrichtung ein Inertgas, beispielsweise Stickstoff oder Argon, zugeführt und/oder ist der Gasatmosphäre mittels der Zusatzgaszuführvorrichtung ein Inertgas zuführbar.

Alternativ ist die Zusatzgasvorrichtung und insbesondere die Verwendung von Spülgasen entbehrlich.

Beispielsweise wird das anorganische Salz in flüssigem Zustand mit einem oder mehreren Gasen überspült.

Die Summe der Partialdrücke sämtlicher gasförmiger Komponenten der Gasatmosphäre ergibt den Gesamtdruck der Fluidführung.

Die Fluidführung ist vorzugsweise ein Bestandteil einer Speichervorrichtung.

Günstig kann es sein, wenn die Fluidführung mit einem Überdruck der Gasatmosphäre betrieben wird.

Vorzugsweise beträgt der Überdruck der Gasatmosphäre ca. 0,1 bar oder mehr, insbesondere ca. 0,3 bar oder mehr, beispielsweise ca. 0,4 bar oder mehr.

Vorzugsweise beträgt der Überdruck der Gasatmosphäre ca. 1 bar oder weniger, insbesondere ca. 0,7 bar oder weniger, beispielsweise ca. 0,6 bar oder weniger.

Ein bevorzugter Druck der Gasatmosphäre liegt in einem Bereich von ca. 0,01 bar und ca. 0,5 bar.

Gemäß einer bevorzugten Ausführungsform beträgt der Überdruck der Gasatmosphäre nach Einstellung eines Gleichgewichtszustands ca. 0,5 bar oder weniger.

Der Überdruck stellt sich beispielsweise durch Ablauf der Zersetzungsreaktion der Anionen ein.

Alternativ kann der Überdruck mittels der Drucksteuerungs- und/oder -regelungseinrichtung erzeugt werden, wobei insbesondere ein Druckgas in den mindestens einen Aufnahmebehälter eingeleitet wird.

Ein Überdruck der Gasatmosphäre verhindert vorzugsweise ein Eindringen von Fremdgasen oder Fremdfluiden aus einer Umgebung der Speichervorrichtung.

Es kann ferner vorgesehen sein, dass die Speichervorrichtung mit einer vorgegebenen Leckrate betrieben wird. Dies bringt insbesondere eine tolerierbare Zersetzungsrate mit sich. Ein Leck ist beispielsweise im Bereich eines Pumpenschafts einer Pumpe, mittels welcher das anorganische Salz befördert wird, angeordnet.

Eine Leckrate beträgt vorzugsweise ca. 10 Vol.-% oder weniger pro Tag, insbesondere ca. 5 Vol.-% oder weniger pro Tag, beispielsweise ca. 1 Vol.-% oder weniger pro Tag, bezogen auf ein Gesamtvolumen des mindestens einen Aufnahmebehälters.

Der mindestens eine Aufnahmebehälter ist vorzugsweise aus einem metallischen Material hergestellt. Vorzugsweise ist der mindestens eine Aufnahmebehälter aus Stahl, insbesondere aus Edelstahl, hergestellt.

Beispielsweise ist der mindestens eine Aufnahmebehälter aus Legierungen von Stahl mit den Stahlqualitäten 1.44xx, 1.45xx, 1.48xx, 2.xxxx oder Mischungen daraus hergestellt.

Es kann vorgesehen sein, dass der mindestens eine Aufnahmebehälter ein, beispielsweise zumindest näherungsweise hohlzylinderförmiger, Speichertank ist.

Alternativ kann der mindestens eine Aufnahmebehälter von einem Leitungsabschnitt gebildet sein.

Das anorganische Salz in flüssigem Zustand wird vorzugsweise in mindestens einem Aufnahmebehälter einer fluiddichten Fluidführung einer Speichervorrichtung bereitgestellt, wobei die Fluidführung eine Wärmeübertragervorrichtung zum Aufheizen und/oder Abkühlen des anorganischen Salzes umfasst. Insbesondere umfasst die Wärmeübertragervorrichtung ein erstes Wärmeübertragerelement zum Aufheizen des anorganischen Salzes und/oder ein zweites Wärmeübertragerelement zum Abkühlen des anorganischen Salzes.

Günstig kann es sein, wenn das anorganische Salz, insbesondere mittels einer Aufheizleitung der Wärmeübertragervorrichtung, aus dem mindestens einen Aufnahmebehälter abgeführt wird und mittels des ersten Wärmeübertragerelements aufgeheizt wird, bevor das anorganische Salz in aufgeheiztem Zustand in den mindestens einen Aufnahmebehälter eingeleitet wird.

Ergänzend oder alternativ wird das anorganische Salz, insbesondere mittels einer Abkühlleitung der Wärmeübertragervorrichtung, in aufgeheiztem Zustand aus dem mindestens einen Aufnahmebehälter abgeführt und mittels des zweiten Wärmeübertragerelements abgekühlt, bevor das anorganische Salz in abgekühltem Zustand in den mindestens einen Aufnahmebehälter eingeleitet wird.

Es kann vorgesehen sein, dass in der Aufheizleitung und/oder in der Abkühlleitung jeweils eine Pumpe (erste Pumpe und zweite Pumpe) zur Beförderung des anorganischen Salzes vorgesehen ist.

Die Erfindung betrifft ferner eine Speichervorrichtung zur Speicherung eines anorganischen Salzes, insbesondere zur Verwendung in einem erfindungsgemäßen Verfahren, wobei das anorganische Salz Anionen umfasst, welche sich bei Wärmezufuhr unter Bildung zumindest eines gasförmigen Zerfallsprodukts zersetzen, wobei die Speichervorrichtung eine Fluidführung umfasst, wobei die Fluidführung mindestens einen Aufnahmebehälter zur Aufnahme des anorganischen Salzes und mindestens eine Drucksteuerungs- und/oder -regelungseinrichtung umfasst, mittels welcher ein Druck mindestens einer Gasatmosphäre innerhalb der Fluidführung steuerbar und/oder regelbar ist, und wobei die Fluidführung fluiddicht ausgebildet ist, dadurch gekennzeichnet, dass mittels der mindestens einen Drucksteuerungs- und/oder -regelungseinrichtung der Druck der mindestens einen Gasatmosphäre durch Erhöhen eines Partialdrucks des zumindest einen gasförmigen Zerfallsprodukts einstellbar ist.

Die Gasatmosphäre ist insbesondere innerhalb des Aufnahmebehälters angeordnet. In Ausführungsformen, in welchen die Fluidführung mehrere Aufnahmebehälter umfasst, kann vorgesehen sein, dass die Gasatmosphäre sich über die mehreren Aufnahmebehälter erstreckt. Alternativ können verschiedene Gasatmosphären in verschiedenen Aufnahmebehältern angeordnet sein. Auf Ausführungsformen, welche mehrere, insbesondere zwei, Aufnahmebehälter umfassen, wird im Folgenden noch näher eingegangen.

Die mindestens eine Drucksteuerungs- und/oder -regelungseinrichtung umfasst vorzugsweise mindestens ein Sensorelement zur Messung des Drucks in der mindestens einen Gasatmosphäre in dem mindestens einen Aufnahmebehälter.

Ergänzend oder alternativ umfasst die mindestens eine Drucksteuerungs- und/oder -regelungseinrichtung eine Ausgleichsvorrichtung zum Ausgleich des Drucks in dem mindestens einen Aufnahmebehälter. Die Ausgleichsvorrichtung umfasst vorzugsweise einen Ausgleichsbehälter zur Speicherung eines oder mehrerer Druckfluide, einen Druckerzeuger zur Beeinflussung eines Drucks in dem Ausgleichsbehälter, insbesondere einen Kompressor, und/oder mindestens einen Wärmeübertrager zur Beeinflussung einer Temperatur in dem Ausgleichsbehälter.

Ein Gasstrom innerhalb der Ausgleichsvorrichtung ist vorzugsweise mittels eines oder mehrerer Ventile, insbesondere Absperrventile, entsperrbar, absperrbar oder regulierbar.

Es kann vorgesehen sein, dass der Ausgleichsbehälter einen Druckgasbereich und einen Druckflüssigkeitsbereich umfasst, wobei in dem Druckgasbereich ein Druckgas speicherbar ist, wobei in dem Druckflüssigkeitsbereich eine Druckflüssigkeit speicherbar ist und wobei das Druckgas durch Kondensation in die Druckflüssigkeit überführbar ist und/oder wobei die Druckflüssigkeit durch Verdampfen in das Druckgas überführbar ist.

Das Druckgas und/oder die Druckflüssigkeit sind vorzugsweise mittels unterschiedlicher Leitungen durch unterschiedliche Ventile regelbar in den mindestens einen Aufnahmebehälter einleitbar.

Zur Kondensation des Druckgases wird eine Temperatur in dem Ausgleichsbehälter vorzugsweise auf eine Temperatur unterhalb einer Siedetemperatur des Druckgases erniedrigt.

Zum Verdampfen der Druckflüssigkeit wird eine Temperatur in dem Ausgleichsbehälter insbesondere auf eine Temperatur oberhalb der Siedetemperatur des Druckgases erhöht.

Die Kondensation und/oder das Verdampfen sind insbesondere bei einem Druckniveau des mindestens einen Aufnahmebehälters ± 0,2 bar durchführbar und/oder werden bei einem Druckniveau des mindestens einen Aufnahmebehälters ± 0,2 bar durchgeführt.

In dem Druckgasbereich sind beispielsweise als Druckgas Stickstoff, Stickstoffmonoxid, Stickstoffdioxid und/oder Sauerstoff vorhanden, während in dem Druckflüssigkeitsbereich flüssiges NO₂ kondensiert (Druckflüssigkeit).

Hierdurch kann ein Gleichgewicht einer Reaktion von Stickstoffmonoxid und Sauerstoff zu (gasförmigem) Stickstoffdioxid zur Produktseite hin verschoben werden, da durch die Kondensation das Reaktionsprodukt zumindest teilweise entfernt wird.

Es kann vorgesehen sein, dass die Speichervorrichtung eine Sicherheitsvorrichtung zur Vermeidung eines Berstens und/oder eines Implodierens des mindestens einen Aufnahmebehälters umfasst, wobei die Sicherheitsvorrichtung ein Überdruckventil und/oder ein Unterdruckventil umfasst, welche(s) mit dem mindestens einen Aufnahmebehälter, insbesondere fluidwirksam, verbunden ist bzw. sind.

Das Überdruckventil ist insbesondere ein Sicherheitsüberdruckventil.

Das Unterdruckventil ist insbesondere ein Sicherheitsunterdruckventil.

In Ausführungsformen, welche mehrere Aufnahmebehälter umfassen, entspricht eine Anzahl von Überdruckventilen und eine Anzahl von Unterdruckventilen vorzugsweise jeweils einer Anzahl von Aufnahmebehältern.

Vorzugsweise umfasst die Fluidführung eine Wärmeübertragervorrichtung, wobei die Wärmeübertragervorrichtung ein erstes Wärmeübertragerelement, insbesondere ein Heizelement, umfasst, mittels welchem das anorganische Salz aufheizbar ist, und wobei die Wärmeübertragervorrichtung ein zweites Wärmeübertragerelement, insbesondere eine Wärmesenke, umfasst, mittels welchem das anorganische Salz abkühlbar ist.

Vorzugsweise umfasst die Fluidführung einen ersten Aufnahmebehälter zur Aufnahme des anorganischen Salzes in aufgeheiztem Zustand und einen zweiten Aufnahmebehälter zur Aufnahme des anorganischen Salzes in abgekühltem Zustand. Der erste Aufnahmebehälter und der zweite Aufnahmebehälter sind vorzugsweise fluidwirksam miteinander verbunden.

Günstig kann es sein, wenn der erste Aufnahmebehälter und der zweite Aufnahmebehälter mittels einer Wärmeübertragervorrichtung der Fluidführung, umfassend ein oder mehrere Wärmeübertragerelemente, thermisch miteinander koppelbar und/oder gekoppelt sind.

Es liegt insbesondere kein direkter Wärmeübergang zwischen dem ersten Aufnahmebehälter und dem zweiten Aufnahmebehälter vor.

Es kann vorgesehen sein, dass die Fluidführung einen ersten Fluidführungsabschnitt und einen zweiten Fluidführungsabschnitt umfasst, wobei insbesondere eine erste Gasatmosphäre des ersten Fluidführungsabschnitts und eine zweite Gasatmosphäre des zweiten Fluidführungsabschnitts bezüglich Druck und/oder Zusammensetzung voneinander getrennt steuerbar und/oder regelbar sind.

In dem ersten Fluidführungsabschnitt sind vorzugsweise ein erster Aufnahmebehälter und eine erste Drucksteuerungs- und/oder -regelungseinrichtung zur Steuerung und/oder Regelung eines Drucks der ersten Gasatmosphäre in dem ersten Fluidführungsabschnitt angeordnet.

Insbesondere sind in dem zweiten Fluidführungsabschnitt ein zweiter Aufnahmebehälter und eine zweite Drucksteuerungs- und/oder -regelungseinrichtung zur Steuerung und oder Regelung eines Drucks der zweiten Gasatmosphäre in dem zweiten Fluidführungsabschnitt angeordnet.

Der erste Aufnahmebehälter und der zweite Aufnahmebehälter sind vorzugsweise mittels einer Wärmeübertragervorrichtung der Fluidführung, umfassend ein oder mehrere Wärmeübertragerelemente, thermisch miteinander koppelbar und/oder gekoppelt.

Die erfindungsgemäße Speichervorrichtung weist vorzugsweise eines oder mehrere der im Zusammenhang mit dem erfindungsgemäßen Verfahren beschriebenen Merkmale und/oder einen oder mehrere der im Zusammenhang mit dem erfindungsgemäßen Verfahren beschriebenen Vorteile auf.

Eine Regeration des anorganischen Salzes durch Verschiebung der Zersetzungsreaktion auf die Eduktseite kann sowohl im ersten Aufnahmebehälter als auch im zweiten Aufnahmebehälter erfolgen.

Die Regeneration kann insbesondere sowohl in einem Heißaufnahmebehälter als auch in einem Kaltaufnahmebehälter durchgeführt werden.

Insbesondere aus kinetischen Gründen kann eine Regeneration bei erhöhten Temperaturen bevorzugt sein.

Es kann vorgesehen sein, dass Gas aus der Gasatmosphäre in einen Flüssigbereich eines oder mehrerer der Aufnahmebehälter eingeleitet wird. Hierbei sprudelt das Gas vorzugsweise durch das anorganische Salz in flüssigem Zustand hindurch. Das Gas kann zum Durchsprudeln durch eine lanzenartige Leitung geleitet werden.

Der Flüssigbereich ist vorzugsweise ein räumlicher Bereich in dem jeweiligen Aufnahmebehälter, in welchem das anorganische Salz in flüssigem Zustand angeordnet ist.

Bei einer in einer Speichervorrichtung mit fluiddichter Fluidführung gelagerten anorganischen Salzmischung aus Natriumnitrat und Kaliumnitrat (60 Gew.-% NaNO₃ und 40 Gew.-% KNO₃) sind beispielsweise eines oder mehrere der folgenden Ergebnisse mit qualitativen chemischen Analysemethoden, beispielsweise mit Ionenchromatografie, messbar:
- nach 500 h bei 550°C beträgt ein Nitritanteil in der Salzmischung in flüssigem Zustand ca. 2,5 mol% oder weniger; und/oder
- nach 500 h bei 550°C beträgt ein Nitratanteil in der Salzmischung in flüssigem Zustand ca. 97,5 mol% oder mehr; und/oder
- ein Druck in der Fluidführung steigt bei Bildung von Nitrit an, fällt aber nach ca. 50 h bei 550°C ab, was auf eine Verschiebung des Gleichgewichts der Zersetzungsreaktion auf die Eduktseite und/oder auf eine systematische Leckrate zurückzuführen ist; und/oder
- nach 200 h bei 580°C beträgt ein Nitratanteil in der Salzmischung in flüssigem Zustand ca. 95,0 mol% oder mehr im Vergleich zu ca. 94.0 mol% Nitrat in einem offenen Referenzsystem ohne fluiddichte Fluidführung bei gleichen Reaktionsbedingungen;
- nach 200 h bei 580°C beträgt ein Nitritanteil in der Salzmischung in flüssigem Zustand ca. 5,0 mol% oder weniger im Vergleich zu ca. 6,0 mol% Nitrit in einem offenen Referenzsystem ohne fluiddichte Fluidführung bei gleichen Reaktionsbedingungen; und/oder
- bei 600°C beträgt ein Nitratanteil in der Salzmischung in flüssigem Zustand ca. 93.0 mol% oder mehr; und/oder
- eine Salzchemie bei 600°C ist mit einer Salzchemie in einem offenen Referenzsystem ohne fluiddichte Fluidführung bei 580°C vergleichbar.

Es ist insbesondere ein Langzeitbetrieb der Speichervorrichtung in einem Temperaturbereich von ca. 240°C bis ca. 650°C möglich.

Es hat sich durch Untersuchungen an der genannten beispielhaften Salzmischung herausgestellt, dass eine Stabilität von Nitratsalzen durch eine Menge an gebildetem gasförmigem Zerfallsprodukt in Form von Nitrit und/oder Oxidionen bestimmt wird.

Von besonderer Bedeutung sind hierbei insbesondere Partialdrücke von Sauerstoff, Stickstoffdioxid und Stickstoffmonoxid in der Gasatmosphäre.

Durch die fluiddichte Fluidführung kann eine Bildung von Zerfallsprodukten (beispielsweise Nitrite, Oxidionen, etc. bei Nitratsalzen) minimiert werden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer ersten Ausführungsform einer Speichervorrichtung, bei welcher ein Aufnahmebehälter vorgesehen ist;
- Fig. 2: eine schematische Darstellung einer zweiten Ausführungsform einer Speichervorrichtung, bei welcher ein Aufnahmebehälter vorgesehen ist;
- Fig. 3: eine schematische Darstellung einer dritten Ausführungsform einer Speichervorrichtung, bei welcher zwei Aufnahmebehälter vorgesehen sind;
- Fig. 4: eine schematische Darstellung einer vierten Ausführungsform einer Speichervorrichtung, bei welcher zwei Aufnahmebehälter vorgesehen sind;
- Fig. 5: eine schematische Darstellung eines Ablaufdiagramms eines Verfahrens zur Speicherung eines anorganischen Salzes; und
- Fig. 6: ein Messdiagramm, in welchem jeweils Oxidionenanteile über der Zeit aufgetragen sind, wobei für unterschiedliche Temperaturen Referenzwerte und Werte für eine Speichervorrichtung, umfassend eine fluiddichte Fluidführung, dargestellt sind.

Gleiche oder funktional äquivalente Elemente sind in sämtlichen Figuren mit denselben Bezugszeichen versehen.

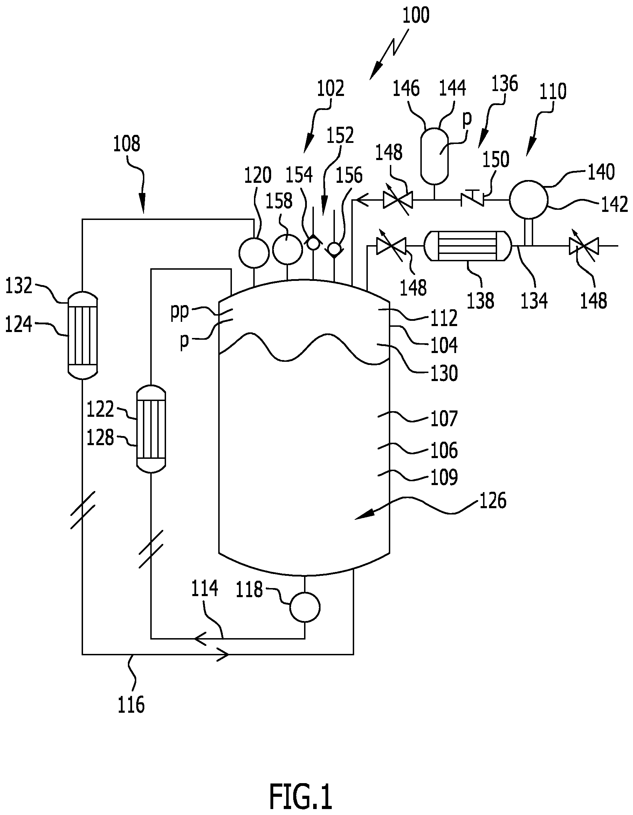

In Fig. 1 ist eine erste Ausführungsform einer als Ganzes mit 100 bezeichneten Speichervorrichtung dargestellt.

Die Speichervorrichtung 100 eignet sich insbesondere zur Verwendung in einem Parabolrinnenkraftwerk oder einem Fresnel-Kraftwerk.

Die Speichervorrichtung 100 umfasst vorzugsweise eine fluiddichte Fluidführung 102, welche einer Aufbewahrung und einem Transport eines anorganischen Salzes 106 innerhalb der Speichervorrichtung 100 dient.

Die Fluidführung 102 umfasst vorliegend einen Aufnahmebehälter 104 zur Aufnahme des anorganischen Salzes 106, eine Wärmeübertragervorrichtung 108 zur Einstellung und/oder Regulierung einer Temperatur des anorganischen Salzes 106 und eine Drucksteuerungs- und/oder -regelungseinrichtung 110 zur Steuerung und/oder Regelung eines Drucks einer Gasatmosphäre 112 in dem Aufnahmebehälter 104 und/oder der Fluidführung 102.

Der Aufnahmebehälter 104 ist vorzugsweise zumindest näherungsweise hohlzylinderförmig ausgebildet und/oder aus einem metallischen Material, beispielsweise aus Stahl gemäß einer der folgenden Legierungen oder Mischungen daraus: 1.44xx, 1.45xx, 1.48xxund/oder 2.xxxx. "x" steht hier jeweils als Platzhalter für eine genauere Qualitätsangabe.

Die Wärmeübertragervorrichtung 108 umfasst vorzugsweise eine Aufheizleitung 114, durch welche das anorganische Salz 106 zum Aufheizen hindurchgeleitet wird und/oder hindurchleitbar ist, und eine Abkühlleitung 116, durch welche das anorganische Salz 106 zum Abkühlen hindurchgeleitet wird und/oder hindurchleitbar ist.

Die Aufheizleitung 114 ist vorzugsweise fluidwirksam mit dem Aufnahmebehälter 104 verbunden, wobei ein Durchfluss des anorganischen Salzes 106 in flüssigem Zustand durch die Aufheizleitung 114 absperrbar ist.

Die Wärmeübertragervorrichtung 108 umfasst insbesondere ferner eine erste Pumpe 118 zur Beförderung des anorganischen Salzes 106 durch die Aufheizleitung 114 und eine zweite Pumpe 120 zur Beförderung des anorganischen Salzes 106 in flüssigem Zustand durch die Abkühlleitung 116.

Ferner umfasst die Wärmerübertragervorrichtung 108 vorliegend ein erstes Wärmeübertragerelement 122 und ein zweites Wärmeübertragerelement 124.

Die erste Pumpe 118 und das erste Wärmeübertragerelement 122 sind vorzugsweise entlang der Aufheizleitung 114 angeordnet und/oder zwischen Leitungsabschnitten der Aufheizleitung 114 angeordnet.

Die zweite Pumpe 120 und das zweite Wärmeübertragerelement 124 sind insbesondere entlang der Abkühlleitung 116 angeordnet und/oder zwischen Leitungsabschnitten der Abkühlleitung 116 angeordnet.

Zum Aufheizen des anorganischen Salzes 106 wird das anorganische Salz 106 in flüssigem Zustand vorzugsweise mittels der ersten Pumpe 118 in einem Flüssigbereich 126 des Aufnahmebehälters 104 aus dem Aufnahmebehälter 104 abgeleitet und mittels der ersten Pumpe 118 durch die Aufheizleitung 114 befördert.

Der Flüssigbereich 126 ist vorzugsweise ein räumlicher Bereich des Aufnahmebehälters 104, in welchem in einem befüllten Zustand des Aufnahmebehälters 104 das anorganische Salz 106 in flüssigem Zustand angeordnet ist.

Mittels des ersten Wärmeübertragerelements 122, insbesondere ein Heizelement 128, wird das anorganische Salz 106 vorzugsweise erwärmt und/oder aufgeheizt, bevor es in einem Gasbereich 130 des Aufnahmebehälters 104 in aufgeheiztem Zustand dem Aufnahmebehälter 104 wieder zugeführt wird.

Der Gasbereich 130 ist vorzugsweise ein räumlicher Bereich des Aufnahmebehälters 104, in welchem in einem befüllten Zustand des Aufnahmebehälters 104 die Gasatmosphäre 112 angeordnet ist.

Zum Abkühlen des anorganischen Salzes 106 in flüssigem Zustand wird das anorganische Salz 106 vorzugsweise in dem Gasbereich 130 des Aufnahmebehälters 104 aus dem Aufnahmebehälter 104 ausgeleitet und mittels der zweiten Pumpe 120 durch die Abkühlleitung 116 befördert, wo das anorganische Salz 106 durch das zweite Wärmeübertragerelement 124, insbesondere eine Wärmesenke 132, hindurchgeleitet wird und so abgekühlt wird.

Wärme des anorganischen Salzes 106 in flüssigem Zustand wird insbesondere auf ein Material der Wärmesenke 132 übertragen und/oder ist auf ein Material der Wärmesenke 132 übertragbar. Anschließend wird das anorganische Salz 106 in abgekühltem Zustand vorzugsweise in dem Flüssigbereich 126 des Aufnahmebehälters 104 in den Aufnahmebehälter 104 eingeleitet.

Das anorganische Salz 106 ist vorzugsweise ein Wärmeträgermedium 107, welches als Träger und/oder Überträger von Wärme auf einen anderen Stoff dient. Insbesondere ist das anorganische Salz ein Wärmespeichermedium 109, durch welches Wärme speicherbar ist und zu einem späteren Zeitpunkt in einem Prozess bereitgestellt werden kann.

Verweilbehälter, welche einen apparativen Aufwand und/oder einen Kostenaufwand erhöhen können, sind vorzugsweise entbehrlich.

Das anorganische Salz 106 in flüssigem Zustand umfasst vorzugsweise Anionen, ausgewählt aus den folgenden Anionen: Nitrate, Nitrite, Chloride, Carbonate und Sulfate. Alternativ sind die Anionen des anorganischen Salzes 106 in flüssigem Zustand von den genannten Anionen - nämlich Nitraten, Nitriten, Chloriden, Carbonaten oder Sulfaten - gebildet.

Beispielsweise umfasst das anorganische Salz 106 in flüssigem Zustand eine Kombination von einem oder mehreren Nitraten und einem oder mehreren Nitriten oder ist aus einer Mischung aus einem oder mehreren Nitratsalzen und einem oder mehreren Nitritsalzen gebildet.

Beispielsweise ist das anorganische Salz 106 aus einer Kombination aus einem oder mehreren, beispielsweise zwei, Nitraten und einem oder mehreren, beispielsweise zwei, Nitriten gebildet.

Als Nitrate haben sich Kaliumnitrat und Natriumnitrat als besonders geeignet erwiesen.

Besonders geeignete Nitrite sind Kaliumnitrit und Natriumnitrit.

Vorzugsweise wird ein molares Verhältnis von Nitrat zu Nitrit von ca. 85:15 gewählt und/oder eingestellt.

Insbesondere wird ein molares Verhältnis von Natrium zu Kalium von ca. 65:45 gewählt und/oder eingestellt.

Das anorganische Salz 106 umfasst vorzugsweise Natriumnitrat, Kaliumnitrat, Natriumnitrit und Kaliumnitrit oder ist daraus gebildet.

Die genannten Anionen - Nitrate, Nitrite, Chloride, Carbonate und Sulfate - zersetzen sich vorzugsweise bei Wärmezufuhr zu mindestens einem gasförmigen Zerfallsprodukt.

Gasförmige Zerfallsprodukte sind bei Nitraten Stickstoffmonoxid, Stickstoffdioxid und/oder Sauerstoff.

Neben Stickstoffmonoxid und Stickstoffdioxid können auch weitere Stickstoffoxide gebildet werden, beispielsweise Distickstofftetroxid, Distickstoffpentoxid, Nitrosylazid, N-Diazonitramid, Distickstofftrioxid und Trinitramid.

Bei Chloriden als Anionen in dem anorganischen Salz 106 bilden sich unter Wärmezufuhr Chlor und/oder Chlorwasserstoff.

Bei Carbonaten als Anionen des anorganischen Salzes 106 bilden sich als gasförmige Zerfallsprodukte Kohlenstoffmonoxid, Kohlenstoffdioxid und/oder Sauerstoff.

Bei Sulfaten als Anionen des anorganischen Salzes 106 bilden sich als gasförmige Zerfallsprodukte Schwefeloxide und/oder Sauerstoff. Es können auch weitere schwefelhaltige Gase gebildet werden.

Durch die Fluiddichtigkeit der Fluidführung 102 ist das Gleichgewicht der Zerfallsreaktion des Anions zu dem gasförmigen Zerfallsprodukt vorzugsweise auf die Eduktseite verschoben.

Hierzu ist der Druck p der Gasatmosphäre 112 insbesondere mittels der Drucksteuerungs- und/oder -regelungseinrichtung 110 einstellbar.

So ist die Stabilität des anorganischen Salzes 106 im Vergleich zu offenen Systemen ohne hermetische Abriegelung vorzugsweise erhöht.

Trotz der hermetischen Abriegelung kann vorgesehen sein, dass die Speichervorrichtung 100 mit einer geringen Leckrate betrieben wird, wobei hierbei insbesondere im Bereich der ersten Pumpe 118 und/oder der zweiten Pumpe 120, beispielsweise an einem jeweiligen Pumpenschaft, ein Leck besteht.

Kationen des anorganischen Salzes 106 in flüssigem Zustand umfassen vorzugsweise Metallkationen, insbesondere Aluminiumkationen und/oder Bleikationen. Das anorganische Salz 106 ist dann ein Aluminiumsalz und/oder ein Bleisalz.

Ergänzend oder alternativ zu Aluminiumsalzen und/oder Bleisalzen können Übergangsmetallsalze, Alkalimetallsalze oder Erdalkalimetallsalze oder Mischungen daraus als anorganische Salze 106 verwendet werden.

Im Falle von Übergangsmetallsalzen sind Nickelsalze, Molybdänsalze, Cobaltsalze, Zirkoniumsalze, Titansalze, Mangansalze, Eisensalze, Kupfersalze, Chromsalze und/oder Zinksalze bevorzugt, wobei die entsprechenden Kationen im flüssigen Zustand des anorganischen Salzes 106 vorliegen.

Im Falle von Alkalimetallsalzen sind Lithiumsalze, Natriumsalze, Kaliumsalze, Cäsiumsalze und/oder Rubidiumsalze bevorzugt, wobei die entsprechenden Kationen im flüssigen Zustand des anorganischen Salzes 106 vorliegen.

Im Falle von Erdalkalimetallsalzen sind Magnesiumsalze, Calciumsalze, Strontiumsalze und/oder Bariumsalze besonders bevorzugt, wobei die entsprechenden Kationen im flüssigen Zustand des anorganischen Salzes 106 vorliegen.

Die Kationen des anorganischen Salzes 106 nehmen insbesondere nicht an der Zersetzungsreaktion der Anionen teil.

Vorzugsweise ist die Zersetzungsreaktion der Anionen reversibel.

Es kann vorgesehen sein, dass die Fluidführung 102 hermetisch abgeriegelt ist und insbesondere kein weiteres Gas zugesetzt wird. Die hermetische Abriegelung erfolgt vorzugsweise vor einer Erwärmung des anorganischen Salzes 106 und/oder vor einer Inbetriebnahme einer Speichervorrichtung 100.

Nach Beginn der Zersetzungsreaktion der Anionen steigt insbesondere ein Partialdruck pp des gasförmigen Zerfallsprodukts, wodurch sich das Gleichgewicht nach einer gewissen Zeit auf die Eduktseite (Anionen) verschiebt.

Durch die hermetische Abriegelung findet insbesondere eine Anreicherung des gasförmigen Zerfallsprodukts statt.

Insbesondere werden keine gasförmigen Zerfallsprodukte an eine Umgebung der Fluidführung 102 angegeben. Beispielsweise ist eine Emission von Stickoxiden minimiert.

Ein Langzeittemperaturbereich, in welchem der Aufnahmebehälter 102 betrieben werden kann, liegt vorzugsweise in einem Bereich von ca. 240°C bis ca. 650°C.

Hierbei umfasst die Gasatmosphäre 112 im Falle von Nitraten und/oder Nitriten als Anionen Stickstoffmonoxid, Stickstoffdioxid und Sauerstoff oder ist daraus gebildet.

Im Falle von Chloriden als Anionen umfasst die Gasatmosphäre 112 ohne Zudosierung eines Gases insbesondere Chlor und/oder Chlorwasserstoff.

Im Falle von Carbonaten als Anionen umfasst die Gasatmosphäre 112 ohne Zudosierung eines Gases vorzugsweise Sauerstoff, Kohlenstoffmonoxid und/oder Kohlenstoffdioxid oder ist daraus gebildet.

Im Falle von Sulfaten als Anionen umfasst die Gasatmosphäre 112 ohne Zudosierung eines Gases vorzugsweise Schwefelmonoxid, Schwefeldioxid und/oder Sauerstoff oder ist daraus gebildet.

Vorzugsweise wird die Gasatmosphäre 112 derart aktiv eingestellt, dass sie Sauerstoff, Stickstoffmonoxid und ein weiteres Stickstoffoxid, beispielsweise Distickstoffmonoxid oder Stickstoffdioxid oder Distickstofftetroxid, umfasst oder aus den genannten Gasen gebildet ist.

Ein Anteil des Sauerstoffs an der Gasatmosphäre 112 liegt vorzugsweise bei ca. 50 Vol.-% oder mehr, bezogen auf ein Gesamtvolumen der Gasatmosphäre 112, und/oder bei ca. 50 mol% oder mehr, bezogen auf eine Gesamtstoffmenge in der Gasatmosphäre 112.

Ein Anteil des Stickstoffmonoxids an der Gasatmosphäre 112 liegt vorzugsweise in einem Bereich von ca. 0,1 Vol.-% bis ca. 1 Vol.-%, bezogen auf das Gesamtvolumen der Gasatmosphäre 112, und/oder von ca. 0,1 mol% bis ca. 1 mol%, bezogen auf die Gesamtstoffmenge in der Gasatmosphäre 112.

Ein Anteil des weiteren Stickstoffoxids, beispielsweise Distickstoffmonoxid oder Stickstoffdioxid oder Distickstofftetroxid, an der Gasatmosphäre 112 liegt vorzugsweise in einem Bereich von ca. 0,01 Vol.-% bis ca. 1 Vol.-%, bezogen auf das Gesamtvolumen der Gasatmosphäre 112, und/oder von ca. 0,1 mol% bis ca. 1 mol%, bezogen auf die Gesamtstoffmenge in der Gasatmosphäre 112.

Alternativ kann vorgesehen sein, dass mittels der Drucksteuerungs- und/oder -regelungseinrichtung 110 ein, insbesondere unreaktives, Gas in den Aufnahmebehälter 104 eingeleitet wird und/oder einleitbar ist.

Solche Gase sind beispielsweise Stickstoff und/oder Argon.

Die Drucksteuerungs- und/oder -regelungseinrichtung 110 umfasst vorzugsweise eine oder mehrere Leitung(en) 134, mittels welcher Elemente einer Ausgleichsvorrichtung 136 der Drucksteuerungs- und/oder -regelungseinrichtung 110 verbunden sind.

Die Elemente der Ausgleichsvorrichtung 136 sind vorzugsweise zumindest ein Wärmeübertrager 138, ein Druckerzeuger 140, insbesondere ein Kompressor 142, und ein Ausgleichsbehälter 144, vorzugsweise ein Gasbehälter 146.

Der Wärmeübertrager 138 dient vorzugsweise einer Einstellung einer Temperatur innerhalb der Ausgleichsvorrichtung 136, insbesondere in dem Ausgleichsbehälter 144.

Mittels des Kompressors 142 ist insbesondere in der Ausgleichsvorrichtung 136 geführtes Gas verdichtbar.

Der Ausgleichsbehälter 144 dient insbesondere einer Speicherung von aus dem Aufnahmebehälter 104 abgeführtem Gas.

In Strömungsrichtung hintereinander angeordnet sind vorzugsweise der Wärmeübertrager 138, der Kompressor 142 und der Ausgleichsbehälter 144. Ein Gasfluss ist insbesondere mittels Ventilen 148 der Ausgleichsvorrichtung 136 regelbar, welche zwischen den einzelnen Elementen der Ausgleichsvorrichtung 136 angeordnet sind.

Mittels des Wärmeübertragers 138 wird vorzugsweise eine Temperatur des Gasstroms bei zu hohem Druck p gesenkt und/oder die Temperatur bei zu niedrigem Druck p erhöht. Druckschwankungen sind so vorzugsweise ausgleichbar.

Sinkt ein Druck p der Gasatmosphäre 112 in dem Aufnahmebehälter 104, wird vorzugsweise Gas aus dem Ausgleichsbehälter 144 in den Aufnahmebehälter 104 eingeleitet. Ein Gasdruck ist dabei insbesondere mittels eines Ventils 148 regelbar, welches in Strömungsrichtung zwischen dem Ausgleichsbehälter 144 und dem Aufnahmebehälter 104 angeordnet ist.

Zwischen den folgenden Elementen ist vorzugsweise ein Ventil 148 zur Regelung eines Gasdrucks und/oder zum Absperren oder Entsperren des Gasstroms angeordnet:
- zwischen dem Aufnahmebehälter 104 und dem Wärmeübertrager 138; und/oder
- zwischen dem Wärmeübertrager 138 und dem Kompressor 142; und/oder
- zwischen dem Ausgleichsbehälter 144 und dem Aufnahmebehälter 104.

Die Ventile 148 sind vorzugsweise Absperrventile.

Zwischen dem Ausgleichsbehälter 104 und dem Kompressor 142 ist insbesondere ein Absperrventil 150 (ein sogenanntes "tight-shut-off"-Ventil) angeordnet, welches eine Rückströmung entgegen der Strömungsrichtung, insbesondere von unreinen Gasen, von dem Ausgleichsbehälter 144 zum Kompressor 142 blockiert. Alternativ zu dem Absperrventil 150 kann auch eine Rückschlagklappe verwendet werden.

Steigt ein Druck p der Gasatmosphäre 112 in dem Aufnahmebehälter 104 über einen kritischen Wert, wird vorzugsweise ein Ventil 148 zwischen dem Aufnahmebehälter 104 geöffnet (entsperrt), wodurch Gas durch Leitungen 134 aus dem Aufnahmebehälter 104 ausgeleitet wird.

Das Gas wird vorzugsweise durch Leitungen 134 in den Kompressors 142 geleitet, wo es insbesondere verdichtet wird, bevor es durch Leitungen 134 in den Ausgleichsbehälter 136 eingeleitet wird. In dem Ausgleichsbehälter wird das Gas insbesondere gespeichert, bis der Druck p in dem Aufnahmebehälter 104 fällt, sodass - wie bereits beschrieben - Gas aus dem Ausgleichsbehälter 144 eingeleitet wird.

Die Speichervorrichtung 100 umfasst vorzugsweise ferner eine Sicherheitsvorrichtung 152. Die Sicherheitsvorrichtung 152 umfasst insbesondere ein Überdruckventil 154, beispielsweise ein Sicherheitsüberdruckventil, und ein Unterdruckventil 156, beispielsweise ein Sicherheitsunterdruckventil.

Das Überdruckventil 154 dient insbesondere der Vermeidung eines Berstens eines Aufnahmebehälters 104 aufgrund von Überdruck. Das Überdruckventil 154 ist vorzugsweise fluidwirksam mit dem Aufnahmebehälter 104, insbesondere mit dem Gasbereich 130 des Aufnahmebehälters 104, verbunden.

Das Unterdruckventil 156 dient vorzugsweise der Vermeidung eines Implodierens des Aufnahmebehälters 104 aufgrund von Unterdruck. Das Unterdruckventil 156 ist vorzugsweise fluidwirksam mit dem Aufnahmebehälter 104, insbesondere mit dem Gasbereich 130 des Aufnahmebehälters 104, verbunden.

Die Drucksteuerungs- und/oder -regelungseinrichtung 110 umfasst vorzugsweise ferner ein Sensorelement 158, welches in dem Gasbereich 130 des Aufnahmebehälters 104 angeordnet ist und/oder fluidwirksam an den Gasbereich 130 des Aufnahmebehälters 104 anschließt.

Das Sensorelement 158 dient vorzugsweise einer Messung des Drucks p in der Gasatmosphäre 112. Insbesondere wird basierend auf dem mittels des Sensorelements 158 gemessenen Drucks p Gas mittels der Drucksteuerungs- und/oder -regelungseinrichtung 110 eingeleitet und/oder ausgeleitet. Dies ist vorzugsweise mittels Ventilen 148 regelbar.

Es kann vorgesehen sein, dass in dem Ausgleichsbehälter 144 eines oder mehrere der im Zusammenhang mit der Gasatmosphäre 112 erläuterten Gase gespeichert werden und/oder speicherbar sind.

Vorzugsweise wird ein Partialdruck pp eines Gases in der Gasatmosphäre 112 mittels der Drucksteuerungs- und/oder -regelungseinrichtung 110 erhöht, bis die Zersetzungsreaktion auf die Eduktseite verschoben wird.

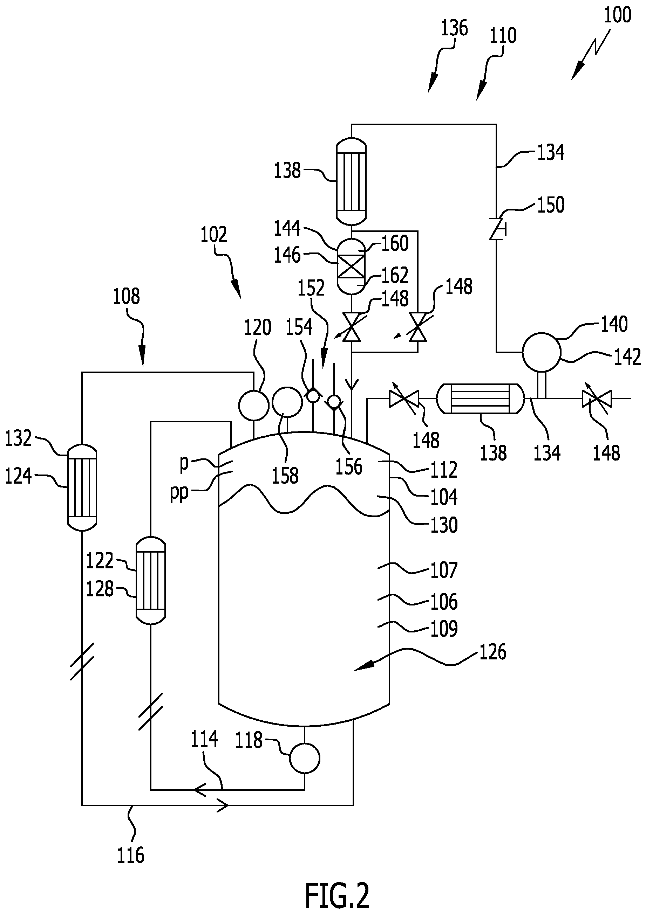

Eine in Fig. 2 dargestellte zweite Ausführungsform einer Speichervorrichtung 100 unterscheidet sich hinsichtlich Aufbau und Funktion im Wesentlichen dadurch von der in Fig. 1 dargestellten ersten Ausführungsform, dass die Ausgleichsvorrichtung 136 zwei Wärmeübertrager 138 umfasst und dass der Ausgleichsbehälter 136 einen Druckgasbereich 160 und einen Druckflüssigkeitsbereich 162 aufweist.

In dem Druckgasbereich 160 ist vorzugsweise ein Druckgas speicherbar. In dem Druckflüssigkeitsbereich 162 ist vorzugsweise eine Druckflüssigkeit speicherbar.

In Ausführungsformen, in welchen die Anionen Nitrate und/oder Nitrite sind, hat es sich als vorteilhaft erwiesen, wenn flüssiges NO₂ die Druckflüssigkeit bildet.

Mittels eines in Strömungsrichtung unmittelbar (nur durch einen Leitungsabschnitt einer Leitung 134 von dem Ausgleichsbehälter 144 getrennt) vor dem Ausgleichsbehälter 144 angeordneten Wärmeübertragers 138 wird vorzugsweise ein sich in Leitungen 134 der Drucksteuerungs- und/oder -regelungseinrichtung 110 befindliches Gas auf eine Temperatur unterhalb der Siedetemperatur des Gases gekühlt. Es kommt zu einer Kondensation des Gases (Druckgases) zu der Druckflüssigkeit. Das Gas kann auch eine Gasmischung sein.

Eine Kondensation des Druckgases ist vorzugsweise bei erhöhtem Druck p begünstigt.

Im Falle von NO₂ wird bei einer Kondensation ein Gleichgewicht einer Reaktion von Stickstoffmonoxid und Sauerstoff zu Stickstoffdioxid vorzugsweise zur Produktseite hin verschoben, da das gasförmige Produkt durch die Kondensation von NO₂ entfernt wird.

In dem Druckgasbereich 160 befindet sich insbesondere das Druckgas, beispielsweise Stickstoffmonoxid, Stickstoff, Sauerstoff und Stickstoffdioxid.

In dem Druckflüssigkeitsbereich 162 des Ausgleichsbehälters 144, insbesondere in einem Sumpf des Ausgleichsbehälters 144, befindet sich insbesondere die kondensierte Druckflüssigkeit und/oder kann dort gespeichert werden.

Vorzugsweise sind bei einem einen Druckgasbereich 160 und einen Druckgasbereich 162 umfassenden Ausgleichsbehälter 144 in Strömungsrichtung gesehen stromabwärts zwei Ventile 148, insbesondere Absperrventile, vorgesehen. Die Ventile 148 sind insbesondere parallel geschaltet.

Mittels eines der zwei Ventile 148 ist vorzugsweise ein Gasstrom eines Druckgases aus dem Ausgleichsbehälter 144 in den Aufnahmebehälter 104 regelbar.

Mittels des anderen der zwei Ventile 148 ist vorzugsweise eine Flüssigkeitsströmung einer Druckflüssigkeit aus dem Ausgleichsbehälter 144 in den Aufnahmebehälter 104 regelbar. Die Druckflüssigkeit verdampft vorzugsweise spätestens beim Eintritt in den Aufnahmebehälter 104.

Im Übrigen stimmt die in Fig. 2 dargestellte zweite Ausführungsform einer Speichervorrichtung 100 mit der in Fig. 1 dargestellten Ausführungsform hinsichtlich Aufbau und Funktion überein, sodass auf deren Beschreibung insoweit Bezug genommen wird.

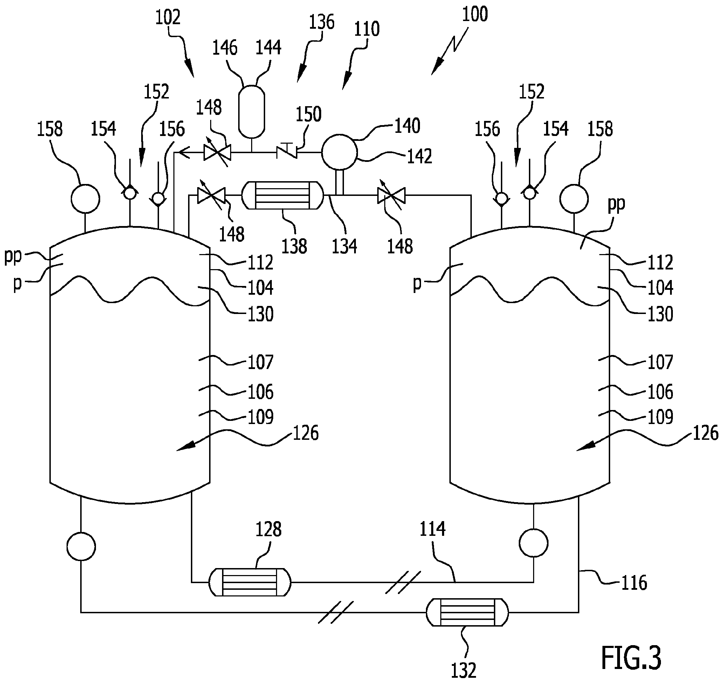

Eine in Fig. 3 dargestellte dritte Ausführungsform einer Speichervorrichtung 100 unterscheidet sich hinsichtlich Aufbau und Funktion im Wesentlichen dadurch von der in Fig. 1 dargestellten ersten Ausführungsform, dass die Fluidführung 102 einen ersten Aufnahmebehälter 104 und einen zweiten Aufnahmebehälter 104 umfasst.

Der erste Aufnahmebehälter 104 und der zweite Aufnahmebehälter 104 sind vorliegend mittels der Wärmeübertragervorrichtung 108 und der Drucksteuerungs- und/oder -regelungseinrichtung 110 fluidwirksam miteinander verbunden und/oder thermisch indirekt (über die Wärmeübertragervorrichtung 108) gekoppelt.

Der erste Aufnahmebehälter 104 fungiert vorzugsweise als Heißaufnahmebehälter zur Aufnahme des anorganischen Salzes 106 in aufgeheiztem Zustand.

Der zweite Aufnahmebehälter 104 fungiert insbesondere als Kaltaufnahmebehälter zur Aufnahme des anorganischen Salzes 106 in abgekühltem Zustand.

Eine Regeration des anorganischen Salzes 106 durch Verschiebung der Zersetzungsreaktion auf die Eduktseite kann sowohl im ersten Aufnahmebehälter 104 als auch im zweiten Aufnahmebehälter 104 erfolgen.

Eine Regeneration bei erhöhten Temperaturen ist aufgrund einer Kinetik der Reaktionen vorteilhaft.

Zur Überführung des anorganischen Salzes 106 vom aufheizten Zustand in den abgekühlten Zustand und umgekehrt dient vorzugsweise die Wärmeübertragervorrichtung 108 (wie im Zusammenhang mit Fig. 1 erläutert).

Eine Temperatur des anorganischen Salzes 106 kann schrittweise erhöht werden.

Die Aufheizleitung 114 und die Abkühlleitung 116, welche insbesondere beide im Flüssigbereich 126 des jeweiligen Aufnahmebehälters 104 angeordnet sind, verbinden vorzugsweise den ersten Aufnahmebehälter 104 und den zweiten Aufnahmebehälter 104.

Die Aufheizleitung 114 und die Abkühlleitung 116 bilden vorzugsweise eine Pendelleitung.

Ferner ist insbesondere mittels Leitungen 134 der Drucksteuerungs-
und/oder -regelungseinrichtung 110 eine fluidwirksame Verbindung zwischen dem ersten Aufnahmebehälter 104 und dem zweiten Aufnahmebehälter 104 geschaffen, wobei eine Gasströmung mittels Ventilen 148 regelbar ist.

Es kann vorgesehen sein, dass an dem ersten Aufnahmebehälter 104 ein erstes Sensorelement 158 angeordnet ist und dass an dem zweiten Aufnahmebehälter 104 ein zweites Sensorelement 158 angeordnet ist. Das erste und das zweite Sensorelement 158 dienen vorzugsweise der Messung eines Drucks p der Gasatmosphäre 112 in dem jeweiligen Aufnahmebehälter 104.

Die Sicherheitsvorrichtung 152 umfasst vorzugsweise zwei Überdruckventile 154, beispielsweise Sicherheitsüberdruckventile, und zwei Unterdruckventile 156, beispielsweise Sicherheitsunterdruckventile. Insbesondere ist zur Vermeidung des Berstens des ersten Aufnahmebehälters 104 ein Überdruckventil 154 an dem ersten Aufnahmebehälter 104 und zur Vermeidung des Berstens des zweiten Aufnahmebehälters 104 ein Überdruckventil 154 an dem zweiten Aufnahmebehälter 104 angeordnet.

Vorzugsweise ist zur Vermeidung des Implodierens des ersten Aufnahmebehälters 104 ein Unterdruckventil 156 an dem ersten Aufnahmebehälter 104 angeordnet und zur Vermeidung des Implodierens des zweiten Aufnahmebehälters 104 ein Unterdruckventil 156 an dem zweiten Aufnahmebehälter 104 angeordnet.

Im Übrigen stimmt die in Fig. 3 dargestellte dritte Ausführungsform einer Speichervorrichtung 100 hinsichtlich Aufbau und Funktion mit der in Fig. 1 dargestellten ersten Ausführungsform überein, sodass auf deren Beschreibung insoweit Bezug genommen wird.

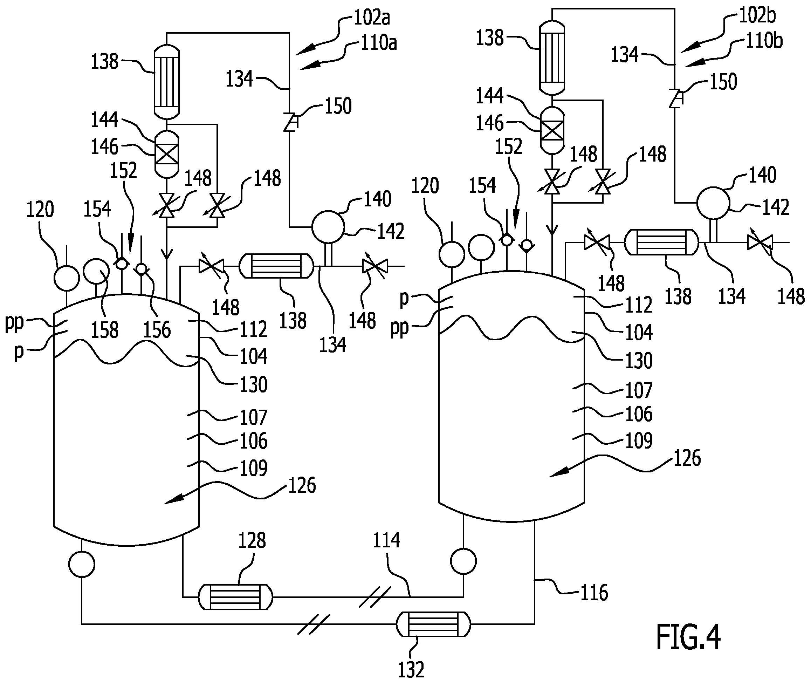

Eine in Fig. 4 dargestellte vierte Ausführungsform einer Speichervorrichtung 100 unterscheidet sich hinsichtlich Aufbau und Funktion im Wesentlichen dadurch von der in Fig. 3 dargestellten Ausführungsform, dass die Fluidführung 102 einen ersten Fluidführungsabschnitt 102a und einen zweiten Fluidführungsabschnitt 102b umfasst.

In dem ersten Fluidführungsabschnitt 102a ist vorzugsweise eine erste Drucksteuerungs- und/oder -regelungseinrichtung 110a zur Steuerung und/oder Regelung einer ersten Gasatmosphäre 112 in dem ersten Aufnahmebehälter 104 angeordnet.

In dem zweiten Fluidführungsabschnitt 102b ist vorzugsweise eine zweite Drucksteuerungs- und/oder -regelungseinrichtung 110b zur Steuerung und/oder Regelung einer zweiten Gasatmosphäre 112 in dem zweiten Aufnahmebehälter 104 angeordnet.

Mittels der Wärmeübertragervorrichtung 108 sind der erste Aufnahmebehälter 104 und der zweite Aufnahmebehälter 104 insbesondere thermisch indirekt gekoppelt.

Ein Druckausgleich zwischen der ersten Gasatmosphäre 112 in dem ersten Aufnahmebehälter 104 und der zweiten Gasatmosphäre 112 in dem zweiten Aufnahmebehälter 104 findet vorzugsweise nicht statt.

Die erste Drucksteuerungs- und/oder -regelungseinrichtung 110a und die zweite Drucksteuerungs- und/oder -regelungseinrichtung 110b sind vorzugsweise jeweils wie die Drucksteuerungs- und/oder -regelungseinrichtung 110 gemäß der ersten Ausführungsform in Fig. 1 ausgebildet.

Im Übrigen stimmt die in Fig. 4 dargestellte vierte Ausführungsform hinsichtlich Aufbau und Funktion mit der in Fig. 3 dargestellten dritten Ausführungsform überein, sodass auf deren Beschreibung insoweit Bezug genommen wird.

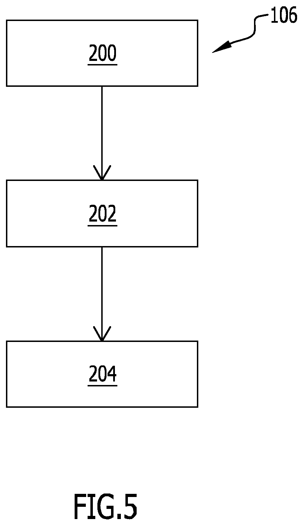

In Fig. 5 ist ein schematisches Ablaufdiagramm eines Verfahrens zur Speicherung des anorganischen Salzes 106 gezeigt. Die in den Fig. 1 bis 4 dargestellten Speichervorrichtungen 100 eignen sich insbesondere zur Speicherung des anorganischen Salzes 106 gemäß dem im Folgenden beschriebenen Verfahren.

Gemäß einem ersten Verfahrensschritt 200 wird vorzugsweise anorganisches Salz 106 in einen oder mehrere Aufnahmebehälter 104 eingefüllt und eine Fluidführung 102, umfassend den einen oder die mehreren Aufnahmebehälter 104, wird vorzugsweise hermetisch abgeriegelt.

In einem zweiten Verfahrensschritt 202 wird das anorganische Salz 106, insbesondere mittels einer Wärmeübertragervorrichtung 108 aufgeheizt, wobei es sich (spätestens) dann in einem flüssigen Zustand befindet. Bevorzugt wird das anorganische Salz 106 bereits in flüssigem Zustand in den einen oder die mehreren Aufnahmebehälter 104 eingefüllt.

In dem flüssigen Zustand besteht insbesondere ein Gleichgewicht zwischen Anionen des anorganischen Salzes 106 und deren gasförmigen Zerfallsprodukten, welche sich in einer Gasatmosphäre 112 in der Fluidführung 102, insbesondere im Bereich des einen oder der mehreren Aufnahmebehälter 104, befinden.

Vorzugsweise ist die Gasatmosphäre 112 in chemischem Gleichgewicht und/oder in direktem Kontakt zu dem anorganischen Salz 106 in flüssigem Zustand.

In einem dritten Verfahrensschritt 204 wird insbesondere ein Druck p der Gasatmosphäre 112 mittels einer Drucksteuerungs- und/oder -regelungseinrichtung 110 eingestellt.

Hierzu wird insbesondere mittels eines Sensorelements 158 der Druck p in der Gasatmosphäre 112 gemessen und insbesondere mittels einer Ausgleichsvorrichtung 136 der Drucksteuerungs- und/oder -regelungseinrichtung 110 ausgeglichen. Zur Steuerung und/oder Regelung werden vorzugsweise Ventile 148 der Ausgleichsvorrichtung 136 entsperrt, gesperrt oder in eine teilweise geöffnete Stellung gebracht.

Bei einem Überdruck wird durch Leitungen 134 der Drucksteuerungs- und/oder - regelungseinrichtung 110 ein Gasstrom aus dem einen oder den mehreren Aufnahmebehälter 104 ausgeleitet und in einem Ausgleichsbehälter 144 der Ausgleichsvorrichtung 136 gespeichert.

Das Gas wird vorzugsweise mittels eines Druckerzeugers 140, insbesondere eines Kompressors 142, verdichtet, bevor es über Leitungen 134 in den Ausgleichsbehälter 144 eingeleitet wird.

Bei einem fallenden Druck p der Gasatmosphäre 112 wird insbesondere in dem Ausgleichsbehälter 144 gespeichertes Gas, mittels Ventilen 148 regelbar, dem einen oder den mehreren Aufnahmebehältern 104 zugeführt und/oder in den einen oder die mehreren Aufnahmebehälter 104 eingeleitet.

So kann insbesondere der Druck p in der Gasatmosphäre 112 auf einem konstanten Niveau gehalten werden.

Das gespeicherte Gas kann auch durch eine Art Lanze in den Flüssigbereich 126 des jeweiligen Aufnahmebehälters 104 eingeleitet werden. Die Lanze ist vorzugsweise ein Bestandteil der Fluidführung 102.

Die Speichervorrichtung 100 wird vorzugsweise bei einem Überdruck der Gasatmosphäre 112 in einem Bereich von ca. 0,1 bar bis ca. 0,7 bar, insbesondere mit einem Überdruck von ca. 0,1 bis ca. 0,4 bar, nach Einstellung eines Gleichgewichtszustands betrieben.

Der Druck der Gasatmosphäre liegt vorzugsweise in einem Bereich von ca. 0,01 bar und ca. 0,5 bar.

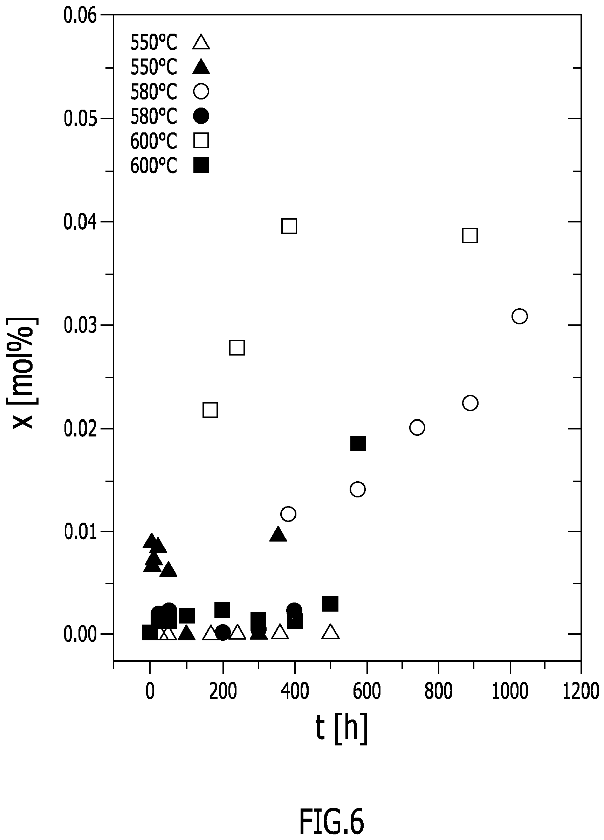

In Fig. 6 ist auf der Ordinate (y-Achse) ein Anionengehalt x in mol-% aufgetragen.

Das Diagramm zeigt Ergebnisse einer Untersuchung eines Natriumnitrat-Kaliumnitratsalzes mit Anteilen von 60 Gew.-% Natriumnitrat und 40 Gew.-% Kaliumnitrat.

Das genannte Salz (unter der Bezeichnung Solarsalz erhältlich) wird typischerweise bei Temperaturen bis zu 565°C eingesetzt.

Auf der Abszisse (x-Achse) ist die Zeit t [h] in Stunden aufgetragen.

Vorliegend wurde ein Oxidionenanteil in dem zuvor genannten Salz in flüssigem Zustand untersucht. Es wurde der Oxidionenanteil bei Temperaturen von 550°C, 580°C und 600°C untersucht und jeweils bei einem Referenzsystem, welches offen und nicht fluiddicht ist, und bei einer Speichervorrichtung 100 mit fluiddichter Fluidführung 102 im zeitlichen Verlauf bis zu 1200 Stunden bestimmt.

Ergebnisse für das Referenzsystem sind als helle Datenpunkte (ohne Füllung) dargestellt, während Oxidionenanteile in dem anorganischen Salz 106 in flüssigem Zustand in einer Speichervorrichtung 100 als dunkle Datenpunkte dargestellt sind.

Ein höherer Oxidionenanteil bedeutet eine stärkere Zersetzung der Anionen.

Aus Fig. 6 ist ersichtlich, dass insbesondere bei höheren Temperaturen ein Oxidionenanteil im offenen Referenzsystem signifikant höher ist als ein Oxidionenanteil in dem fluiddicht gespeicherten Salz.

Während der Oxidionenanteil bei 600°C im offenen Referenzsystem auf bis zu ca. 0,04 mol% ansteigt, beträgt der Oxidionenanteil bei dem fluiddicht gelagerten Salz weniger als die Hälfte.

Aus der Fig. 6 ist ersichtlich, dass das oben genannte Salz - wenn es fluiddicht gespeichert wird - auch bei höheren Temperaturen eine im Vergleich zum geschlossenen Referenzsystem erhöhte Lebensdauer aufweist, da die Zersetzungsreaktion verlangsamt und/oder gehemmt wird.

Die Oxidanteile wurden jeweils mit Ionenchromatographie gemessen.

Durch die vorzugsweise erhöhte Lebensdauer und/oder - da die Zersetzung bei deutlich höheren Temperaturen beginnt - eine erhöhte Betriebstemperatur kann eine (Wärme-)Speicherkapazität des anorganischen Salzes 106 erhöht sein.

So ist insbesondere ein erhöhter Wirkungsgrad von Dampfturbinen von Systemen möglich, in welchen eine fluiddichte Speicherung von anorganischen Salzen 106 eingesetzt wird. Wirkungsgrade von Dampfturbinen in Kraftwerken oder kraftwerksähnlichen Prozessen sind direkt abhängig von maximalen Betriebstemperaturen von Salzschmelzen des anorganischen Salzes 106, welches hier als Wärmeträgermedium 107 und/oder Wärmespeichermedium 109 dient.

Im Vergleich zu herkömmlichen Betriebstemperaturen in offenen Systemen ist vorzugsweise ein Betrieb bei erhöhter Betriebstemperatur und im Wesentlichen unveränderter thermischer Stabilität des anorganischen Salzes 106 möglich.

### Bezugszeichenliste

- 100: Speichervorrichtung
- 102: Fluidführung
- 102a: erster Fluidführungsabschnitt
- 102b: zweiter Fluidführungsabschnitt
- 104: Aufnahmebehälter
- 106: anorganisches Salz
- 107: Wärmeträgermedium
- 109: Wärmespeichermedium
- 108: Wärmeübertragervorrichtung
- 110: Drucksteuerungs- und/oder -regelungseinrichtung
- 110a: erste Drucksteuerungs- und/oder -regelungseinrichtung
- 110b: zweite Drucksteuerungs- und/oder -regelungseinrichtung
- 112: Gasatmosphäre
- 114: Aufheizleitung
- 116: Abkühlleitung
- 118: erste Pumpe
- 120: zweite Pumpe
- 122: erstes Wärmeübertragerelement
- 124: zweites Wärmeübertragerelement
- 126: Flüssigbereich
- 128: Heizelement
- 130: Gasbereich
- 132: Wärmesenke
- 134: Leitung
- 136: Ausgleichsvorrichtung
- 138: Wärmeübertrager
- 140: Druckerzeuger
- 142: Kompressor
- 144: Ausgleichsbehälter
- 146: Gasbehälter
- 148: Ventil
- 150: Absperrventil
- 152: Sicherheitsvorrichtung
- 154: Überdruckventil
- 156: Unterdruckventil
- 158: Sensorelement
- 160: Druckgasbereich
- 162: Druckflüssigkeitsbereich
- 200: Verfahrensschritt
- 202: zweiter Verfahrensschritt
- 204: dritter Verfahrensschritt

- p: Druck
- pp: Partialdruck

## Patentansprüche

1. Verfahren zur Speicherung eines anorganischen Salzes (106), wobei das anorganische Salz (106) insbesondere ein Wärmeträgermedium (107) und/oder ein Wärmespeichermedium (109) ist, wobei das Verfahren Folgendes umfasst:
- Bereitstellen eines anorganischen Salzes (106) in flüssigem Zustand, umfassend Anionen, welche sich bei Wärmezufuhr unter Bildung zumindest eines gasförmigen Zerfallsprodukts zersetzen; und
- Einstellen eines Drucks (p) einer Gasatmosphäre (112), wobei die Gasatmosphäre (112) in einem chemischen Gleichgewicht mit dem anorganischen Salz (106) in flüssigem Zustand steht,
**dadurch gekennzeichnet, dass**
der Druck (p) der Gasatmosphäre (112) durch Erhöhen eines Partialdrucks (pp) zumindest eines gasförmigen Zerfallsprodukts eingestellt wird.

2. Verfahren nach Anspruch 1, **dadurch gekennzeichnet, dass** die Anionen eines oder mehrere der folgenden Anionen umfassen oder daraus gebildet sind: Nitrate, Nitrite, Chloride, Carbonate und Sulfate.

3. Verfahren nach Anspruch 1 oder 2, **dadurch gekennzeichnet, dass** das anorganische Salz (106) in flüssigem Zustand Kationen umfasst, wobei die Kationen vorzugsweise Metallkationen, insbesondere Aluminiumkationen und/oder Bleikationen,
und/oder
Übergangsmetallkationen, beispielsweise Nickelkationen, Molybdänkationen, Cobaltkationen, Zirkoniumkationen, Titankationen, Mangankationen, Eisenkationen, Kupferkationen, Chromkationen und/oder Zinkkationen, und/oder
Alkalimetallkationen, beispielsweise Lithiumkationen, Natriumkationen, Kaliumkationen, Cäsiumkationen und Rubidiumkationen und/oder Erdalkalimetallkationen, beispielsweise Magnesiumkationen, Calciumkationen, Strontiumkationen und/oder Bariumkationen,
umfassen oder daraus gebildet sind.

4. Verfahren nach einem der Ansprüche 1 bis 3, **dadurch gekennzeichnet, dass** die Gasatmosphäre (112) eines oder mehrere der folgenden Gase umfasst oder daraus gebildet ist: Stickstoff, Argon, Sauerstoff, Ozon, Stickstoffmonoxid, Stickstoffdioxid, Distickstofftetroxid, Distickstoffpentoxid, Nitrosylazid, N-Diazonitramid, Distickstofftrioxid und Trinitramid; oder
dass die Gasatmosphäre (112) eines oder mehrere der folgenden Gase umfasst oder daraus gebildet ist: Stickstoff, Argon, Wasserstoff, Chlor und Chlorwasserstoff; oder
dass die Gasatmosphäre (112) eines oder mehrere der folgenden Gase umfasst oder daraus gebildet ist: Stickstoff, Argon, Sauerstoff, Kohlenstoffmonoxid und Kohlenstoffdioxid; oder
dass die Gasatmosphäre (112) eines oder mehrere der folgenden Gase umfasst oder daraus gebildet ist: Stickstoff, Argon, Schwefelmonoxid und Schwefeldioxid.

5. Verfahren nach einem der Ansprüche 1 bis 4, **dadurch gekennzeichnet, dass** das anorganische Salz (106) in flüssigem Zustand in mindestens einem Aufnahmebehälter (104) einer fluiddichten Fluidführung (102) einer Speichervorrichtung (100) bereitgestellt wird, wobei insbesondere mittels einer Drucksteuerungs- und/oder -regelungseinrichtung (110) ein konstanter Druck (p) der Gasatmosphäre (112) in dem mindestens einen Aufnahmebehälter (104) eingestellt wird.

6. Verfahren nach einem der Ansprüche 1 bis 5, **dadurch gekennzeichnet, dass** das anorganische Salz (106) in flüssigem Zustand und die Gasatmosphäre (112) in einer hermetisch abgeschlossenen Fluidführung (102) einer Speichervorrichtung (100) ein isochores System bilden.

7. Verfahren nach einem der Ansprüche 1 bis 6, **dadurch gekennzeichnet, dass** der Partialdruck (pp) durch Zuführen des zumindest einen gasförmigen Zerfallsprodukts zu der Gasatmosphäre (112) oder durch Bereitstellen des anorganischen Salzes (106) in flüssigem Zustand in mindestens einem Aufnahmebehälter (104) einer fluiddichten Fluidführung (102) erhöht wird.

8. Verfahren nach einem der Ansprüche 1 bis 7, **dadurch gekennzeichnet, dass** das anorganische Salz (106) in flüssigem Zustand in mindestens einem Aufnahmebehälter (104) einer fluiddichten Fluidführung (102) einer Speichervorrichtung (100) bereitgestellt wird, wobei die Fluidführung (102) eine Wärmeübertragervorrichtung (108) zum Aufheizen und/oder Abkühlen des anorganischen Salzes (106) umfasst, wobei die Wärmeübertragervorrichtung (108) ein erstes Wärmeübertragerelement (122) zum Aufheizen des anorganischen Salzes (106) und/oder ein zweites Wärmeübertragerelement (124) zum Abkühlen des anorganischen Salzes (106) umfasst, wobei das anorganische Salz (106) aus dem mindestens einen Aufnahmebehälter (104) abgeführt wird und mittels des ersten Wärmeübertragerelements (122) aufgeheizt wird, bevor das anorganische Salz (106) in aufgeheiztem Zustand in den mindestens einen Aufnahmebehälter (104) eingeleitet wird und/oder wobei das anorganische Salz (106) in aufgeheiztem Zustand aus dem mindestens einen Aufnahmebehälter (104) abgeführt wird und mittels des zweiten Wärmeübertragerelements (124) abgekühlt wird, bevor das anorganische Salz (106) in abgekühltem Zustand in den mindestens einen Aufnahmebehälter (104) eingeleitet wird.

9. Speichervorrichtung (100) zur Speicherung eines anorganischen Salzes (106), insbesondere zur Verwendung in einem Verfahren nach einem der Ansprüche 1 bis 8, wobei das anorganische Salz (106) Anionen umfasst, welche sich bei Wärmezufuhr unter Bildung zumindest eines gasförmigen Zerfallsprodukts zersetzen, wobei die Speichervorrichtung (100) eine Fluidführung (102) umfasst, wobei die Fluidführung (102) mindestens einen Aufnahmebehälter (104) zur Aufnahme des anorganischen Salzes (106) und mindestens eine Drucksteuerungs- und/oder -regelungseinrichtung (110) umfasst, mittels welcher ein Druck (p) mindestens einer Gasatmosphäre (112) innerhalb der Fluidführung (102) steuerbar und/oder regelbar ist, und wobei die Fluidführung (102) fluiddicht ausgebildet ist,
**dadurch gekennzeichnet, dass**
mittels der mindestens einen Drucksteuerungs- und/oder -regelungseinrichtung (110) der Druck (p) der Gasatmosphäre (112) durch Erhöhen eines Partialdrucks (pp) zumindest eines gasförmigen Zerfallsprodukts einstellbar ist.

10. Speichervorrichtung (110) nach Anspruch 9, **dadurch gekennzeichnet, dass** die mindestens eine Drucksteuerungs- und/oder -regelungseinrichtung (110) mindestens ein Sensorelement (158) zur Messung des Drucks (p) in der mindestens einen Gasatmosphäre (112) in dem mindestens einen Aufnahmebehälter (104) umfasst und/oder dass die mindestens eine Drucksteuerungs- und/oder -regelungseinrichtung (110) eine Ausgleichsvorrichtung (136) zum Ausgleich des Drucks (p) in dem mindestens einen Aufnahmebehälter (104) umfasst, wobei die Ausgleichsvorrichtung (136) einen Ausgleichsbehälter (144) zur Speicherung eines oder mehrerer Druckfluide, einen Druckerzeuger (140) zur Beeinflussung eines Drucks (p) in dem Ausgleichsbehälter (144), insbesondere einen Kompressor (142), und/oder mindestens einen Wärmeübertrager (138) zur Beeinflussung einer Temperatur in dem Ausgleichsbehälter (144) umfasst.

11. Speichervorrichtung (100) nach Anspruch 10, **dadurch gekennzeichnet, dass** der Ausgleichsbehälter (144) einen Druckgasbereich (160) und einen Druckflüssigkeitsbereich (162) umfasst, wobei in dem Druckgasbereich (160) ein Druckgas speicherbar ist, wobei in dem Druckflüssigkeitsbereich (162) eine Druckflüssigkeit speicherbar ist und wobei das Druckgas durch Kondensation in die Druckflüssigkeit überführbar ist und/oder wobei die Druckflüssigkeit durch Verdampfen in das Druckgas überführbar ist.

12. Speichervorrichtung (100) nach einem der Ansprüche 9 bis 11, **dadurch gekennzeichnet, dass** die Speichervorrichtung (100) eine Sicherheitsvorrichtung (152) zur Vermeidung eines Berstens und/oder eines Implodierens des mindestens einen Aufnahmebehälters (104) umfasst, wobei die Sicherheitsvorrichtung (152) ein Überdruckventil (154) und/oder ein Unterdruckventil (156) umfasst, welche mit dem mindestens einen Aufnahmebehälter (104), insbesondere fluidwirksam, verbunden sind.

13. Speichervorrichtung (100) nach einem der Ansprüche 9 bis 12, **dadurch gekennzeichnet, dass** die Fluidführung (102) eine Wärmeübertragervorrichtung (108) umfasst, wobei die Wärmeübertragervorrichtung (108) ein erstes Wärmeübertragerelement (122), insbesondere ein Heizelement (128), umfasst, mittels welchem das anorganische Salz (106) aufheizbar ist, und wobei die Wärmeübertragervorrichtung (108) ein zweites Wärmeübertragerelement (124), insbesondere eine Wärmesenke (132), umfasst, mittels welchem das anorganische Salz (106) abkühlbar ist.

14. Speichervorrichtung (100) nach einem der Ansprüche 9 bis 13, **dadurch gekennzeichnet, dass** die Fluidführung (102) einen ersten Aufnahmebehälter (104) zur Aufnahme des anorganischen Salzes (106) in aufgeheiztem Zustand und einen zweiten Aufnahmebehälter (104) zur Aufnahme des anorganischen Salzes (106) in abgekühltem Zustand umfasst, wobei der erste Aufnahmebehälter (104) und der zweite Aufnahmebehälter (104) fluidwirksam miteinander verbunden sind und/oder wobei der erste Aufnahmebehälter (104) und der zweite Aufnahmebehälter (104) mittels einer Wärmeübertragervorrichtung (108) der Fluidführung (102), umfassend ein oder mehrere Wärmeübertragerelemente (122, 124), thermisch miteinander koppelbar und/oder gekoppelt sind.

15. Speichervorrichtung (100) nach einem der Ansprüche 9 bis 13, **dadurch gekennzeichnet, dass** die Fluidführung (102) einen ersten Fluidführungsabschnitt (102a) und einen zweiten Fluidführungsabschnitt (102b) umfasst, wobei eine erste Gasatmosphäre (112) des ersten Fluidführungsabschnitts (102a) und eine zweite Gasatmosphäre (112) des zweiten Fluidführungsabschnitts (102b) bezüglich Druck (p) und/oder Zusammensetzung voneinander getrennt steuerbar und/oder regelbar sind, wobei in dem ersten Fluidführungsabschnitt (102a) ein erster Aufnahmebehälter (104) und eine erste Drucksteuerungs- und/oder
- regelungseinrichtung (110a) zur Steuerung und/oder Regelung eines Drucks (p) der ersten Gasatmosphäre (112) in dem ersten Fluidführungsabschnitt (102a) angeordnet sind, wobei in dem zweiten Fluidführungsabschnitt (102b) ein zweiter Aufnahmebehälter (104) und eine zweite Drucksteuerungs- und/oder - regelungseinrichtung (110b) zur Steuerung und/oder Regelung eines Drucks (p) der zweiten Gasatmosphäre (112) in dem zweiten Fluidführungsabschnitt (102b) angeordnet sind und wobei der erste Aufnahmebehälter (104) und der zweite Aufnahmebehälter (104) mittels einer Wärmeübertragervorrichtung (108) der Fluidführung (102), umfassend ein oder mehrere Wärmeübertragerelemente (122, 124), thermisch miteinander koppelbar und/oder gekoppelt sind.

## Claims

1. Method for storing an inorganic salt (106), the inorganic salt (106) being more particularly a heat transfer medium (107) and/or a heat storage medium (109), and the method comprising the following:
- providing an inorganic salt (106) in liquid state, comprising anions which on supply of heat decompose to form at least one gaseous disintegration product;
and
- setting a pressure (p) of a gas atmosphere (112), the gas atmosphere (112) being in a chemical equilibrium with the inorganic salt (106) in liquid state,
**characterized in that**
the pressure (p) of the gas atmosphere (112) is set by increasing a partial pressure (pp) of at least one gaseous disintegration product.

2. Method according to Claim 1, **characterized in that** the anions are formed of or comprise one or more of the following anions: nitrates, nitrites, chlorides, carbonates, and sulfates.

3. Method according to Claim 1 or 2, **characterized in that** the inorganic salt (106) in liquid state comprises cations, the cations preferably being formed of or comprising metal cations, more particularly aluminum cations and/or lead cations,
and/or
transition metal cations, for example nickel cations, molybdenum cations, cobalt cations, zirconium cations, titanium cations, manganese cations, iron cations, copper cations, chromium cations and/or zinc cations,
and/or
alkali metal cations, for example lithium cations, sodium cations, potassium cations, cesium cations, and rubidium cations, and/or
alkaline earth metal cations, for example magnesium cations, calcium cations, strontium cations and/or barium cations.

4. Method according to any of Claims 1 to 3, **characterized in that** the gas atmosphere (112) is formed of or comprises one or more of the following gases: nitrogen, argon, oxygen, ozone, nitrogen monoxide, nitrogen dioxide, dinitrogen tetroxide, dinitrogen pentoxide, nitrosyl azide, N-diazonitramide, dinitrogen trioxide, and trinitramide; or
**in that** the gas atmosphere (112) is formed of or comprises one or more of the following gases: nitrogen, argon, hydrogen, chlorine, and hydrogen chloride; or
**in that** the gas atmosphere (112) is formed of or comprises one or more of the following gases: nitrogen, argon, oxygen, carbon monoxide, and carbon dioxide; or
**in that** the gas atmosphere (112) is formed of or comprises one or more of the following gases: nitrogen, argon, sulfur monoxide, and sulfur dioxide.

5. Method according to any of Claims 1 to 4, **characterized in that** the inorganic salt (106) in liquid state is provided in at least one receiving container (104) of a fluidtight fluid conduit (102) of a storage device (100), a constant pressure (p) of the gas atmosphere (112) being set in the at least one receiving container (104) more particularly by means of a pressure control and/or pressure regulation means (110).

6. Method according to any of Claims 1 to 5, **characterized in that** the inorganic salt (106) in liquid state and the gas atmosphere (112) form an isochoric system in a hermetically sealed fluid conduit (102) of a storage device (100).

7. Method according to any of Claims 1 to 6, **characterized in that** the partial pressure (pp) is increased by supplying the at least one gaseous disintegration product to the gas atmosphere (112) or by providing the inorganic salt (106) in liquid state in at least one receiving container (104) of a fluidtight fluid conduit (102).

8. Method according to any of Claims 1 to 7, **characterized in that** the inorganic salt (106) in liquid state is provided in at least one receiving container (104) of a fluidtight fluid conduit (102) of a storage device (100), the fluid conduit (102) comprising a heat transfer device (108) for heating and/or cooling the inorganic salt (106), the heat transfer device (108) comprising a first heat transfer element (122) for heating the inorganic salt (106) and/or a second heat transfer element (124) for cooling the inorganic salt (106), the inorganic salt (106) being taken off from the at least one receiving container (104) and heated by means of the first heat transfer element (122), before the inorganic salt (106) in heated state is introduced into the at least one receiving container (104), and/or the inorganic salt (106) in heated state being taken off from the at least one receiving container (104) and cooled by means of the second heat transfer element (124), before the inorganic salt (106) in cooled state is introduced into the at least one receiving container (104).

9. Storage device (100) for storing an inorganic salt (106), more particularly for use in a method according to any of Claims 1 to 8, the inorganic salt (106) comprising anions which on supply of heat decompose to form at least one gaseous disintegration product, the storage device (100) comprising a fluid conduit (102), the fluid conduit (102) comprising at least one receiving container (104) for receiving the inorganic salt (106) and comprising at least one pressure control and/or pressure regulation means (110) by means of which a pressure (p) of at least one gas atmosphere (112) within the fluid conduit (102) can be controlled and/or regulated, and the fluid conduit (102) being fluidtight in configuration,
**characterized in that**
the pressure (p) of the gas atmosphere (112) can be set by means of the at least one pressure control and/or pressure regulation means (110) by increasing a partial pressure (pp) of at least one gaseous disintegration product.

10. Storage device (110) according to Claim 9, **characterized in that** the at least one pressure control and/or pressure regulation means (110) comprises at least one sensor element (158) for measuring the pressure (p) in the at least one gas atmosphere (112) in the at least one receiving container (104), and/or **in that** the at least one pressure control and/or pressure regulation means (110) comprises an equalizing device (136) for equalizing the pressure (p) in the at least one receiving container (104), the equalizing device (136) comprising an equalizing container (144) for storing one or more pressurized fluids, a pressure generator (140) for influencing a pressure (p) in the equalizing container (144), more particularly a compressor (142), and/or at least one heat exchanger (138) for influencing a temperature in the equalizing container (144).

11. Storage device (100) according to Claim 10, **characterized in that** the equalizing container (144) comprises a pressurized gas region (160) and a pressurized liquid region (162), a pressurized gas being storable in the pressurized gas region (160), a pressurized liquid being storable in the pressurized liquid region (162), and the pressurized gas being convertible into the pressurized liquid by condensation and/or the pressurized liquid being convertible into the pressurized gas by evaporation.

12. Storage device (100) according to any of Claims 9 to 11, **characterized in that** the storage device (100) comprises a safety device (152) for preventing the at least one receiving container (104) bursting and/or imploding, the safety device (152) comprising an overpressure valve (154) and/or an underpressure valve (156) which are connected, more particularly fluidically, to the at least one receiving container (104).

13. Storage device (100) according to any of Claims 9 to 12, **characterized in that** the fluid conduit (102) comprises a heat transfer device (108), the heat transfer device (108) comprising a first heat transfer element (122), more particularly a heating element (128), by means of which the inorganic salt (106) can be heated, and the heat transfer device (108) comprising a second heat transfer element (124), more particularly a heat sink (132), by means of which the inorganic salt (106) can be cooled.

14. Storage device (100) according to any of Claims 9 to 13, **characterized in that** the fluid conduit (102) comprises a first receiving container (104) for receiving the inorganic salt (106) in heated state and a second receiving container (104) for receiving the inorganic salt (106) in cooled state, the first receiving container (104) and the second receiving container (104) being fluidically connected to one another and/or the first receiving container (104) and the second receiving container (104) being thermally couplable and/or coupled to one another by means of a heat transfer device (108) of the fluid conduit (102), comprising one or more heat transfer elements (122, 124).

15. Storage device (100) according to any of Claims 9 to 13, **characterized in that** the fluid conduit (102) comprises a first fluid conduit section (102a) and a second fluid conduit section (102b), a first gas atmosphere (112) of the first fluid conduit section (102a) and a second gas atmosphere (112) of the second fluid conduit section (102b) being controllable and/or regulatable separately from one another in terms of pressure (p) and/or composition, a first receiving container (104) and a first pressure control and/or pressure regulation means (110a) being arranged in the first fluid conduit section (102a) for controlling and/or regulating a pressure (p) of the first gas atmosphere (112) in the first fluid conduit section (102a), a second receiving container (104) and a second pressure control and/or pressure regulation means (110b) being arranged in the second fluid conduit section (102b) for controlling and/or regulating a pressure (p) of the second gas atmosphere (112) in the second fluid conduit section (102b), and the first receiving container (104) and the second receiving container (104) being thermally couplable and/or coupled to one another by means of a heat transfer device (108) of the fluid conduit (102), comprising one or more heat transfer elements (122, 124).

## Revendications

1. Procédé de stockage d'un sel inorganique (106), dans lequel le sel inorganique (106) est en particulier un milieu caloporteur (107) et/ou un milieu de stockage de chaleur (109), dans lequel le procédé comprend les étapes suivantes :
- la fourniture d'un sel inorganique (106) à l'état liquide, comprenant des anions qui se décomposent lors d'un apport de chaleur pour former au moins un produit de décomposition gazeux ; et
- l'ajustement d'une pression (p) d'une atmosphère gazeuse (112), l'atmosphère gazeuse (112) se trouvant en équilibre chimique avec le sel inorganique (106) à l'état liquide,
**caractérisé en ce que**
la pression (p) de l'atmosphère gazeuse (112) est ajustée par augmentation d'une pression partielle (pp) d'au moins un produit de décomposition gazeux.

2. Procédé selon la revendication 1, **caractérisé en ce que** les anions comprennent ou sont formés à partir d'un ou plusieurs des anions suivants : nitrates, nitrites, chlorures, carbonates et sulfates.

3. Procédé selon la revendication 1 ou 2, **caractérisé en ce que** le sel inorganique (106) contient des cations à l'état liquide, les cations comprenant de préférence des cations métalliques, en particulier des cations aluminium et/ou des cations plomb, et/ou
des cations de métaux de transition, par exemple des cations nickel, des cations molybdène, des cations cobalt, des cations zirconium, des cations titane, des cations manganèse, des cations fer, des cations cuivre, des cations chrome et/ou des cations zinc,
et/ou
des cations de métaux alcalins, par exemple des cations lithium, des cations sodium, des cations potassium, des cations césium et des cations rubidium et/ou des cations de métaux alcalino-terreux, par exemple des cations magnésium, des cations calcium, des cations strontium et/ou des cations baryum,
ou sont formés à partir de ceux-ci.

4. Procédé selon l'une quelconque des revendications 1 à 3, **caractérisé en ce que** l'atmosphère gazeuse (112) comprend ou est formée à partir d'un ou plusieurs des gaz suivants : azote, argon, oxygène, ozone, monoxyde d'azote, dioxyde d'azote, tétroxyde de diazote, pentoxyde de diazote, nitrosylazide, N-diazonitramide, trioxyde de diazote et trinitramide ; ou
**en ce que** l'atmosphère gazeuse (112) comprend ou est formée à partir d'un ou plusieurs des gaz suivants : azote, argon, hydrogène, chlore et chlorure d'hydrogène ; ou
**en ce que** l'atmosphère gazeuse (112) comprend ou est formée à partir d'un ou plusieurs des gaz suivants : azote, argon, oxygène, monoxyde de carbone et dioxyde de carbone ; ou
**en ce que** l'atmosphère gazeuse (112) comprend ou est formée à partir d'un ou plusieurs des gaz suivants : azote, argon, monoxyde de soufre et dioxyde de soufre.

5. Procédé selon l'une quelconque des revendications 1 à 4, **caractérisé en ce que** le sel inorganique (106) est fourni à l'état liquide dans au moins un récipient récepteur (104) d'une conduite de fluide étanche aux fluides (102) d'un dispositif de stockage (100), une pression constante (p) de l'atmosphère gazeuse (112) dans l'au moins un récipient récepteur (104) étant ajustée en particulier au moyen d'un dispositif de commande et/ou de régulation de pression (110).

6. Procédé selon l'une quelconque des revendications 1 à 5, **caractérisé en ce que** le sel inorganique (106) à l'état liquide et l'atmosphère gazeuse (112) dans une conduite de fluide (102) fermée hermétiquement d'un dispositif de stockage (100) forment un système isochorique.

7. Procédé selon l'une quelconque des revendications 1 à 6, **caractérisé en ce que** la pression partielle (pp) est augmentée en amenant l'au moins un produit de décomposition gazeux dans l'atmosphère gazeuse (112) ou en fournissant le sel inorganique (106) à l'état liquide dans au moins un récipient récepteur (104) d'une conduite de fluide (102) étanche aux fluides.

8. Procédé selon l'une quelconque des revendications 1 à 7, **caractérisé en ce que** le sel inorganique (106) est fourni à l'état liquide dans au moins un récipient récepteur (104) d'une conduite de fluide (102) étanche aux fluides d'un dispositif de stockage (100), la conduite de fluide (102) comprenant un dispositif caloporteur (108) pour chauffer et/ou refroidir le sel inorganique (106), dans lequel le dispositif caloporteur (108) comprend un premier élément caloporteur (122) pour chauffer le sel inorganique (106) et/ou un deuxième élément caloporteur (124) pour refroidir le sel inorganique (106), le sel inorganique (106) étant évacué de l'au moins un récipient récepteur (104) et chauffé au moyen du premier élément caloporteur (122), avant que le sel inorganique (106) ne soit introduit dans l'au moins un récipient récepteur (104) à l'état chauffé et/ou dans lequel le sel inorganique (106) est évacué de l'au moins un récipient récepteur (104) à l'état chauffé et refroidi au moyen du deuxième élément caloporteur (124), avant que le sel inorganique (106) ne soit introduit dans l'au moins un récipient récepteur (104) à l'état refroidi.

9. Dispositif de stockage (100) pour stocker un sel inorganique (106), en particulier pour utilisation dans un procédé selon l'une quelconque des revendications 1 à 8, dans lequel le sel inorganique (106) comprend des anions qui se décomposent lors d'un apport de chaleur pour former au moins un produit de décomposition gazeux, dans lequel le dispositif de stockage (100) comprend une conduite de fluide (102), la conduite de fluide (102) comprenant au moins un récipient récepteur (104) destiné à recevoir le sel inorganique (106) et au moins un dispositif de commande et/ou de régulation de pression (110), au moyen duquel une pression (p) d'au moins une atmosphère gazeuse (112) à l'intérieur de la conduite de fluide (102) peut être commandée et/ou régulée, et la conduite de fluide (102) étant réalisée de manière étanche aux fluides,
**caractérisé en ce que**,
au moyen de l'au moins un dispositif de commande et/ou de régulation de pression (110), la pression (p) de l'atmosphère gazeuse (112) peut être ajustée par augmentation d'une pression partielle (pp) d'au moins un produit de décomposition gazeux.

10. Dispositif de stockage (110) selon la revendication 9, **caractérisé en ce que** l'au moins un dispositif de commande et/ou de régulation de pression (110) présente au moins un élément capteur (158) pour mesurer la pression (p) dans l'au moins une atmosphère gazeuse (112) dans l'au moins un récipient récepteur (104) et/ou **en ce que** l'au moins un dispositif de commande et/ou de régulation de pression (110) présente un dispositif d'équilibrage (136) pour équilibrer la pression (p) dans l'au moins un récipient récepteur (104), dans lequel le dispositif d'équilibrage (136) comprend un réservoir d'équilibrage (144) pour stocker un ou plusieurs fluides sous pression, un générateur de pression (140) pour influencer une pression (p) dans le réservoir d'équilibrage (144), en particulier un compresseur (142), et/ou au moins un caloporteur (138) pour influencer une température dans le réservoir d'équilibrage (144).

11. Dispositif de stockage (100) selon la revendication 10, **caractérisé en ce que** le récipient d'équilibrage (144) comprend une zone de gaz sous pression (160) et une zone de liquide sous pression (162), un gaz sous pression pouvant être stocké dans la zone de gaz sous pression (160), un liquide sous pression pouvant être stocké dans la zone de liquide sous pression (162) et le gaz sous pression peut être converti en le liquide sous pression par condensation et/ou le liquide sous pression pouvant être converti en le gaz sous pression par évaporation.

12. Dispositif de stockage (100) selon l'une quelconque des revendications 9 à 11, **caractérisé en ce que** le dispositif de stockage (100) présente un dispositif de sécurité (152) pour empêcher l'éclatement et/ou l'implosion de l'au moins un récipient récepteur (104), le dispositif de sécurité (152) présentant une soupape de surpression (154) et/ou une soupape de dépression (156) qui sont reliées à l'au moins un récipient récepteur (104), en particulier de manière fluidique.

13. Dispositif de stockage (100) selon l'une quelconque des revendications 9 à 12, **caractérisé en ce que** la conduite de fluide (102) comprend un dispositif caloporteur (108), le dispositif caloporteur (108) comprenant un premier élément caloporteur (122), en particulier un élément chauffant (128), au moyen duquel le sel inorganique (106) peut être chauffé, et le dispositif caloporteur (108) comprenant un deuxième élément caloporteur (124), en particulier un dissipateur thermique (132), au moyen duquel le sel inorganique (106) peut être refroidi.

14. Dispositif de stockage (100) selon l'une quelconque des revendications 9 à 13, **caractérisé en ce que** la conduite de fluide (102) comprend un premier récipient récepteur (104) pour recevoir le sel inorganique (106) à l'état chauffé et un deuxième récipient récepteur (104) pour recevoir le sel inorganique (106) à l'état refroidi, le premier récipient récepteur (104) et le deuxième récipient récepteur (104) étant reliés l'un à l'autre de manière fluidique et/ou le premier récipient récepteur (104) et le deuxième récipient récepteur (104) pouvant être couplés thermiquement et/ou étant couplés l'un à l'autre au moyen d'un dispositif caloporteur (108) de la conduite de fluide (102), comprenant un ou plusieurs éléments caloporteurs (122, 124).

15. Dispositif de stockage (100) selon l'une quelconque des revendications 9 à 13, **caractérisé en ce que** la conduite de fluide (102) comprend une première partie de conduite de fluide (102a) et une deuxième partie de conduite de fluide (102b), dans lequel une première atmosphère gazeuse (112) de la première partie de conduite de fluide (102a) et une deuxième atmosphère gazeuse (112) de la deuxième partie de conduite de fluide (102b) peuvent être commandées et/ou régulées séparément l'une de l'autre en ce qui concerne la pression (p) et/ou la composition, dans lequel dans la première partie de conduite de fluide (102a) un premier récipient récepteur (104) et un premier dispositif de commande et/ou de régulation de pression (110a) pour commander et/ou réguler une pression (p) de la première atmosphère gazeuse (112) étant disposés dans la première partie de conduite de fluide (102a), dans lequel dans la deuxième partie de conduite de fluide (102b) un deuxième récipient récepteur (104) et un deuxième dispositif de commande et/ou de régulation de pression (110b) pour commander et/ou réguler une pression (p) de la deuxième atmosphère gazeuse (112) étant disposés dans la deuxième partie de conduite de fluide (102b), et le premier récipient récepteur (104) et le deuxième récipient récepteur (104) pouvant être couplés et/ou étant couplés thermiquement l'un à l'autre au moyen d'un dispositif caloporteur (108) de la conduite de fluide (102), comprenant un ou plusieurs éléments caloporteurs (122, 124).
